# EUROPEAN PATENT SPECIFICATION

(11) **EP 3 396 664 B1**
(45) Date of publication and mention of the grant of the patent: **03.06.2020**
(21) Application number: 18168559.5
(22) Date of filing: 20.04.2018
(51) Int. Cl.: G10L 15/22

(54) **ELECTRONIC DEVICE FOR PROVIDING SPEECH RECOGNITION SERVICE AND METHOD THEREOF**
ELEKTRONISCHE VORRICHTUNG ZUR BEREITSTELLUNG EINES SPRACHERKENNUNGSDIENSTES UND VERFAHREN DAFÜR
DISPOSITIF ÉLECTRONIQUE POUR FOURNIR UN SERVICE DE RECONNAISSANCE VOCALE ET PROCÉDÉ ASSOCIÉ

(30) Priority: 24.04.2017 KR 20170052135
(43) Date of publication of application: 31.10.2018
(73) Proprietor: Samsung Electronics Co., Ltd., Gyeonggi-do 16677 (KR)
(72) Inventor: PAN, Zhedan, 16707 Gyeonggi-do, (KR); PARK, Sung Pa, 06765 Seoul, (KR); MATHEW NEYYAN, Biju, 560037 Bangalore, (IN); KU, Han Jun, 16504 Gyeonggi-do, (KR)
(74) Representative: HGF Limited

(56) References cited:
- US-A1- 2004 153 321
- US-A1- 2015 134 334
- US-B1- 6 937 984

## Description

### CROSS-REFERENCE TO RELATED APPLICATIONS

This application is based on and claims priority to Korean Patent Application No. 10-2017-0052135, filed on April 24, 2017, in the Korean Intellectual Property Office.

### BACKGROUND

### 1. Field

The present disclosure generally relates to speech recognition technology and electronic devices providing the same.

### 2. Description of Related Art

For the convenience of the user, recently developed electronic devices have included various input schemes. For example, an electronic device may provide a voice input scheme using speech recognition technology. The electronic device may receive voice data generated by user speech and may convert the received voice data to natural language text using speech recognition technology. An exemplary device using speech recognition technology is shown in US 2004/0153321 A1.

The converted text may be used as input data of various applications and programs. For example, the converted text may be a message to be transmitted by a message application, or the converted text may be as a search query inputted into the search window of a web browser.

Concurrently, artificial intelligence systems, which are computer systems that implement human-level intelligence, have been developed. These artificial intelligence systems have learning capabilities, and their intelligence improves over time as they are used by the user. Artificial intelligence technology (e.g., machine learning technology or deep learning technology) may include technologies that simulate the functions (e.g., recognition or determination) of the human brain. This may be done by using algorithms that classify or learn the characteristics of various input data.

For example, the technologies employed by an artificial intelligence system may include a language understanding technology that understands natural language input, a visual understanding technology that recognizes objects , an inference or prediction technique that can logically infer and predict information, a knowledge expression technology that processes human experience information as knowledge data, and an operation control technology that controls autonomous driving of vehicles and/or robots. It is understood that the language understanding technology can recognize and process human language and can include natural language processing, machine translation, dialogue system, query response, speech recognition/synthesis, and the like.

The above information is presented as background information only to assist with an understanding of the present disclosure. No determination has been made, and no assertion is made, as to whether any of the above might be applicable as prior art with regard to the present disclosure.

### SUMMARY

As explained above, the text converted from voice data through speech recognition may be used as input data. However, sometimes the voice data may be converted incorrectly. In this case, the incorrectly converted text may be used as the input data. Accordingly, before the converted text can be utilized as the input data, the user needs to confirm the converted text.

One way to facilitate this confirmation is to provide a specific standby time period so that the user can verify and/or revise the converted text.

Since the user needs to verify and revise the text within the standby time period, the user needs to recognize the period has begun to run. In addition, when a set time period is provided regardless of the amount of content, the time period may be too short for a large amount of content but too long for a small amount of content. This may also cause inconvenience for the user.

Aspects of the present disclosure are to address at least the above-mentioned problems and/or disadvantages and to provide at least the advantages described below. Accordingly, an aspect of the present disclosure is to provide an electronic device that provides a dynamic standby time according to the amount of speech input from the user and provides a user interface for the standby time.

In accordance with an aspect of the present disclosure, an electronic device includes a microphone; a display; a communication circuit; a memory in which an application is stored; and a processor electrically connected to the microphone, the display, the communication circuit, and the memory, wherein the processor is configured to: output an execution screen of the application on the display; obtain voice data through the microphone; display, on the execution screen, a text converted from the voice data; display, on the execution screen, an indicator associated with a standby time determined based on at least one of an acquisition time of the voice data and a length of the text, wherein the acquisition time of the voice data is the total time period from a point in time when the input of the voice data is started to when the voice input is terminated; and when the standby time elapses, transmit the text to an external device through the communication circuit.

In accordance with another aspect of the present disclosure, a method performed by an electronic device includes obtaining voice data through a microphone; displaying a text converted from the voice data on a display; displaying, on the display, an indicator associated with a standby time determined based on at least one of an acquisition time of the voice data and a length of the text, wherein the acquisition time of the voice data is the total time period from a point in time when the input of the voice data is started to when the voice input is terminated; and when the standby time elapses, determining a text to be entered.

According to various embodiments of the present disclosure, a dynamic standby time may be provided depending on the length or the content of a user's speech input.

According to various embodiments of the present disclosure, a standby time customized for a specific user may be provided.

According to various embodiments of the present disclosure, a user interface visually indicating the standby time may be provided.

In addition, various different features and advantages directly or indirectly understood through this disclosure may be provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an environment in which a voice input is made, according to an embodiment;
FIG. 2 is a block diagram illustrating an electronic device, according to an embodiment;
FIG. 3 is a flowchart illustrating a process to provide a standby time associated with a voice input, according to an embodiment of the present disclosure;
FIG. 4 is a flowchart illustrating a process to provide a standby time associated with a voice input, according to another embodiment of the present disclosure;
FIG. 5 is a flowchart illustrating a process to provide a standby time associated with a voice input, according to yet another embodiment of the present disclosure;
FIG. 6 is a flowchart illustrating a process to revise a standby time, according to an embodiment of the present disclosure;
FIG. 7 illustrates a user interface, according to an embodiment of the present disclosure;
FIG. 8 illustrates an indicator, according to various embodiments of the present disclosure;
FIG. 9 illustrates an execution screen of a message application, according to an embodiment of the present disclosure;
FIG. 10 is a flowchart illustrating a process to provide a standby time associated with a voice input, according to yet another embodiment;
FIG. 11 is a block diagram illustrating an electronic device in a network environment, according to an embodiment;
FIG. 12 is a diagram illustrating an integrated intelligent system, according to an embodiment of the present disclosure;
FIG. 13 is a block diagram illustrating a user terminal of an integrated intelligent system, according to an embodiment of the present disclosure;
FIG. 14 is view illustrating when an intelligence app of a user terminal is executed, according to an embodiment of the present disclosure;
FIG. 15 is a block diagram illustrating an intelligence server of an integrated intelligent system, according to an embodiment of the present disclosure; and
FIG. 16 is a diagram illustrating a path rule generating method of a natural language understanding (NLU) module, according to an embodiment of the present disclosure.

### DETAILED DESCRIPTION

Hereinafter, various embodiments of the present disclosure may be described with reference to accompanying drawings. Accordingly, those of ordinary skill in the art will recognize that various modifications, equivalents, and/or alternatives on the various embodiments described herein can be made without departing from the scope of the present disclosure. With regard to description of drawings, similar elements may be marked by similar reference numerals.

In this disclosure, the expressions "have," "may have," "include," "comprise," "may include," and "may comprise" used herein indicate existence of corresponding features (e.g., elements such as numeric values, functions, operations, or components) but do not exclude presence of additional features.

In this disclosure, the expressions "A or B," "at least one of A or/and B," or "one or more of A or/and B," and the like may include any and all combinations of one or more of the associated listed items. For example, the term "A or B," "at least one of A and B," or "at least one of A or B" may refer to all of the case (1) where at least one A is included, the case (2) where at least one B is included, or the case (3) where both of at least one A and at least one B are included.

The terms, such as "first," "second," and the like used in this disclosure may refer to corresponding components without implying an order of importance, and are used merely to distinguish each component from the others without unduly limiting the components. For example, "a first user device" and "a second user device" indicate different user devices regardless of the order or priority. In other examples, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be interchangeable with expressions such as "suitable for," "having the capacity to," "designed to," "adapted to," "made to," or "capable of." The term "configured to" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in this disclosure are used to describe specified embodiments and are not intended to limit the scope of the present disclosure. Singular expressions may also include the corresponding plural expressions unless otherwise specified. All the terms used herein, which include technical or scientific terms, may have the same meaning that is generally understood by a person skilled in the art. Further, it should be understood that when applicable, terms should be given their contextual meanings in the relevant art. In some cases, even if terms are defined in this disclosure, they may not be interpreted to exclude embodiments of this disclosure.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA) device, a magnetic resonance imaging (MRI) device, a computed tomography (CT) device, scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of this disclosure may not be limited to the above-described electronic devices and may include other electronic devices and new electronic devices according to the development of technologies.

Hereinafter, electronic devices according to various embodiments will be described with reference to the accompanying drawings. In this disclosure, the term "user" may refer to a person who uses an electronic device or may refer to a device (e.g., an artificial intelligence electronic device) that uses the electronic device.

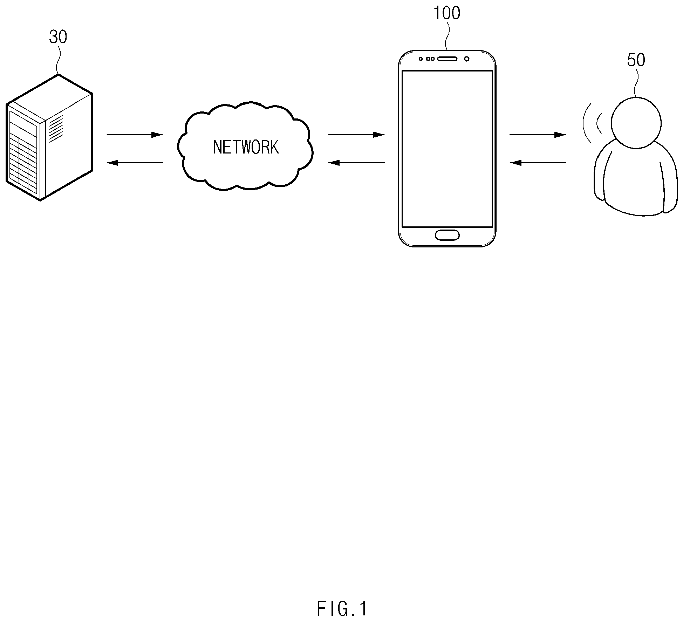

FIG. 1 illustrates an environment in which a voice input is made, according to an embodiment.

Referring to FIG. 1, an electronic device 100 may obtain voice data from a user 50. The electronic device 100 may transmit the voice data to an external device 30 (e.g., server or the like) connected over a network and may receive text data, which is converted from the voice data, from the external device 30. Alternatively, the electronic device 100 may convert the voice data into the text data and may transmit the converted text data to the external device 30.

Accordingly, the electronic device 100 may obtain the speech of the user 50 as an input. The electronic device 100 may perform speech recognition on the speech and may obtain a text corresponding to the speech using the speech recognition. For example, the electronic device 100 may perform speech recognition by using an automatic speech recognition (ASR) module in the electronic device 100. Alternatively, the electronic device 100 may transmit the obtained speech data to the external server, which provides the ASR function. The electronic device 100 may then receive the converted text from the external server.

Before performing additional operations or functions using the converted text, the electronic device 100 may provide a user interface for the user to confirm that the converted text has been properly converted. While the user interface is provided, the converted text may not be finalized but may be revised by the user 50. In the specification, the time period from when the converted text is displayed to when the text is finalized may be referred to as a "standby time."

The user 50 may determine whether the text has been properly converted during the standby time. In the case where the text has been properly converted, the user 50 may confirm that the converted text is the text to be used for the subsequent additional operations. In the case where the text has not been properly converted, for example when speech recognition introduced errors, the user 50 may revise the text and confirm that the revised text is to be used for the subsequent additional operations.

In an embodiment, the voice input function of the electronic device 100 may be used for a message application. The message application may mean an application transmitting and receiving a message. The message may include a text message, an email, and an instant message. For example, the user 50 may speak the content to be transmitted, by using the message application. The electronic device 100 may generate a message from the text converted from the speech, and may transmit the message to the external device 30. In this case, the external device 30 may be a counterpart terminal that receives the message or may be an external server device.

In another embodiment, the voice input function of the electronic device 100 may be used for a web browser. The user 50 may speak the content to be entered into the web browser, and the electronic device 100 may enter the text converted from the speech into the web browser. The entered text may be transmitted to the external device 30 over the network. In this case, when the external device 30 is a search engine server, the text may be transmitted and the corresponding search may be performed. In another example, when the external device 30 is a social media server, a post including the entered text may be uploaded.

Hereinafter, the exemplary embodiment uses voice input for a message application of the electronic device 100. However, as described above, the present disclosure is not limited thereto. Instead, the voice input function of the electronic device 100 may be used for all use cases requiring text inputs.

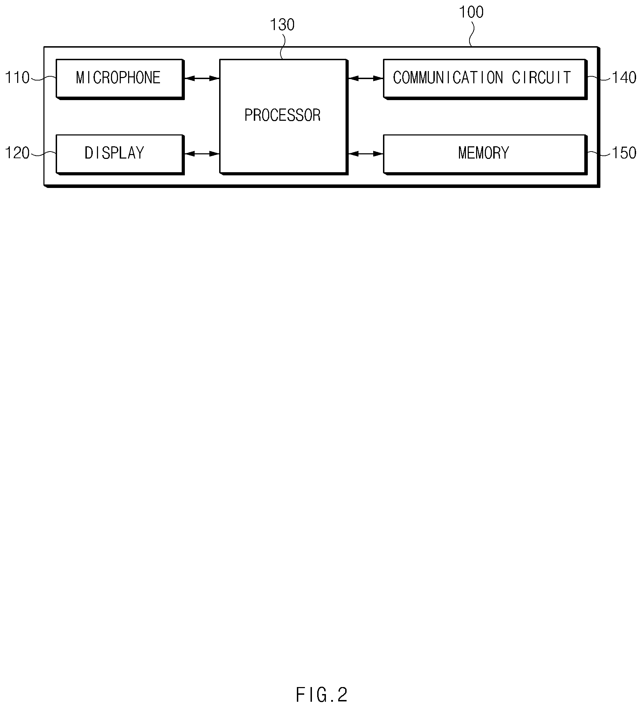

FIG. 2 is a block diagram illustrating an electronic device, according to an embodiment;

Referring to FIG. 2, the electronic device 100 may include a microphone 110, a display 120, a processor 130, a communication circuit 140, and a memory 150.

The microphone 110 may obtain a voice input from a user. For example, the microphone 110 may obtain the user's speech as the voice input. The microphone 110 may perform a noise canceling function for the purpose of improving the voice input signal. Furthermore, the microphone 110 may convert the analog signal of the voice input to a digital signal. The conversion of the signal may be performed by the processor 130. The converted digital signal may be used as an input for processes such as ASR, natural language processing, etc.

The display 120 may display the execution screen of the message application and the text converted from the voice input. Moreover, the display 120 may display an indicator associated with the standby time. The indicator associated with the standby time may be a user interface item (e.g., icon, status bar, or the like) visually indicating the standby time. The user may visually identify the standby time using the indicator. The display of the indicator may change depending on the length of the standby time.

The processor 130 may be electrically connected to the microphone 110, the display 120, the communication circuit 140, and the memory 150 so as to signals may be exchanged among these components. The processor 130 may control overall operations of the electronic device 100 and the elements included in the electronic device 100. The processor 130 may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. In addition, an artisan understands and appreciates that a "processor" or "microprocessor" may be hardware in the claimed disclosure.

The communication circuit 140 may transmit data to an external device and may receive the data from the external device. For example, when transmitting a message to the external device via the message application, the electronic device 100 may use the communication circuit 140.

In an embodiment, the memory 150 may store the message application, i.e. store the program code/instructions of the message application. In addition, instructions for implementing various other modules/functions may be stored in the memory 150. The processor 130 may implement modules/functions by executing the instructions stored in the memory 150.

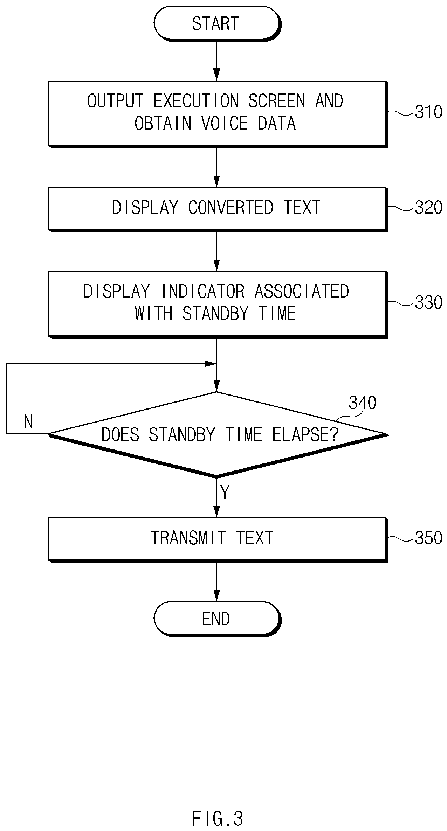

FIG. 3 is a flowchart illustrating a process to provide a standby time associated with a voice input, according to an embodiment of the present disclosure. The process of FIG. 3 may be performed by the electronic device 100 illustrated in FIG. 2. Hereinafter, for convenience of description, the process of FIG. 3 will be described with reference to a method in which the electronic device 100 processes a voice input for a message application.

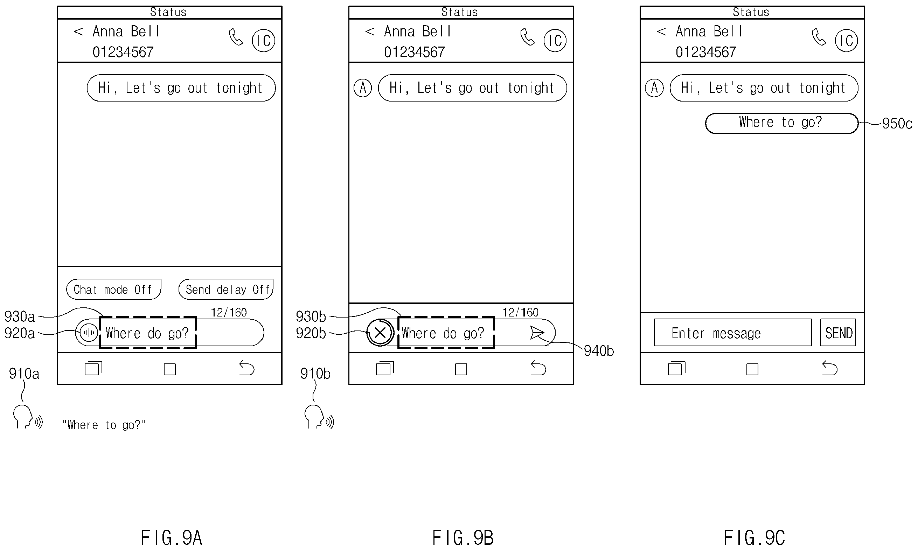

According to an embodiment, the processor 130 of the electronic device 100 may output the execution screen of the message application stored in the memory 150, through the display 120. The exemplary execution screen will be described with reference to FIG. 9.

In operation 310, the processor 130 of the electronic device 100 may obtain voice data from a user through the microphone 110. For example, when the user 50 speaks toward the microphone 110, which is exposed to the exterior of the electronic device 100, a voice signal may be captured by the microphone 110, and the electronic device 100 may obtain the voice data including the voice signal.

In operation 320, the processor 130 of the electronic device 100 may display the text converted from the voice data on the execution screen. By displaying the converted text on the execution screen, the electronic device 100 may allow the user 50 to confirm the conversion.

In an embodiment, the electronic device 100 may convert the voice signal of the user 50 into text using an ASR module. Alternatively, the electronic device 100 may transmit voice data to an external server through the communication circuit 140. The external server may receive the voice data and may perform speech recognition on the received voice data to generate text. The external server may then transmit the text to the electronic device 100.

In operation 330, the processor 130 of the electronic device 100 may display an indicator associated with the standby time on the execution screen of the message application. The length of the standby time may be determined based on at least one of the acquisition time of the voice data and the length of the text converted from the voice data.

The acquisition time of the voice data means the total time period from a point in time when the input of the voice data is started to when the voice input is terminated. This may be the same as or proportional to the total speech time of the user 50.

Since the amount of converted text is likely greater when the total speech time is longer, the electronic device 100 may correspondingly determine the length of the standby time to be longer. For example, when the speech time is 5 seconds, the electronic device 100 may determine that the standby time is 5 seconds; when the speech time is 10 seconds, the electronic device 100 may determine that the standby time is 10 seconds. In another embodiment, when the speech time is 4 seconds, the electronic device 100 may provide a standby time of 3 seconds; when the speech time is 3 seconds, the electronic device 100 may provide a standby time of 2.25 seconds.

The length of the text may mean the number of characters included in the converted text. Since the user requires more time to examine a larger amount of text, the electronic device 100 may determine the standby time to be longer. For example, when the converted text is 60 characters, the electronic device 100 may determine that the standby time is 10 seconds; when the converted text is 10 characters, the electronic device 100 may determine that the standby time is 3 seconds.

In another embodiment, the standby time may be determined based on both the acquisition time of the voice data and the text length. For example, when the speech speed of the user 50 is slow, the speech time will be long even though the number of spoken characters may be small. Accordingly, in consideration of both of the two factors, the electronic device 100 may determine the standby time based on the number of spoken characters per hour generated.

In another embodiment, the standby time may be determined based on speech content. For example, when the same characters are repeated in the speech content, the electronic device 100 may determine that the standby time is relatively shorter, even though the length of the text and the acquisition time of the voice data are relatively larger. Accordingly, the electronic device 100 may determine the standby time based on the length of the text and the speech time; the acquisition time of the voice data and the speech content, etc.

In operation 340, the processor 130 of the electronic device 100 may determine whether the determined standby time has elapsed. When the standby time elapses, in operation 350, the processor 130 of the electronic device 100, while executing the message application, may transmit the converted text through the communication circuit 140 to an external device. Thus, when the standby time elapses, the electronic device 100 may assume that the user 50 has completed confirmation or revision of the converted text.

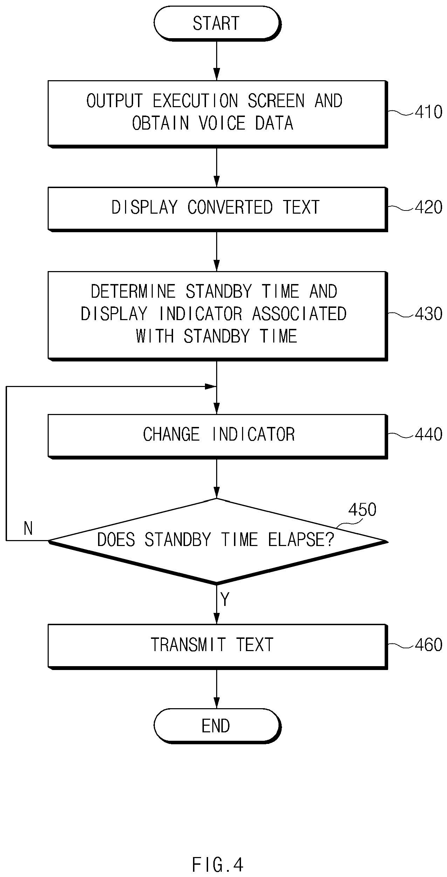

FIG. 4 is a flowchart illustrating a process to provide a standby time associated with a voice input, according to another embodiment of the present disclosure. The process of FIG. 4 may be performed by the electronic device 100 illustrated in FIG. 2.

Operation 410 to operation 430 may correspond to operation 310 to operation 330 described in FIG. 3. Hereinafter, the duplicated description thereof is omitted.

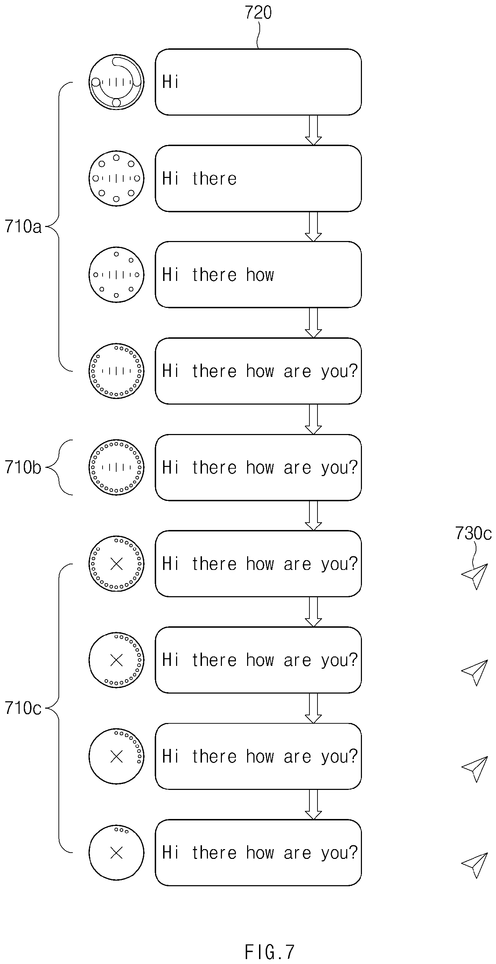

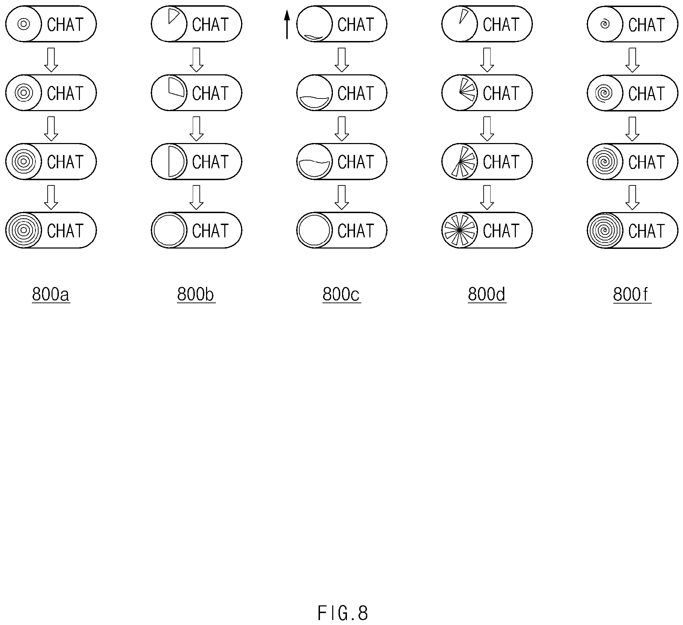

In operation 440, the processor 130 of the electronic device 100 may change the displayed indicator. The exemplary indicator will be described below with reference to FIGS. 7 and 8.

In an embodiment, the processor 130 of the electronic device 100 may change the indicator depending on the determined length of the standby time. For example, while voice data is obtained from the user 50, the processor 130 may determine the standby time in real time and may change the indicator depending on the determined standby time.

Thus, the indicator may be changed to indicate the length of the standby time, and it may provide a visual indication of the standby time to the user 50. For example, as the speech time increases or as the length of the converted text increases, the standby time may be determined to be longer. The user 50 may see the length of the determined standby time through the indicator. An example thereof will be described below with reference to 710a in FIG. 7.

In operation 450, the processor 130 of the electronic device 100 may determine whether the determined standby time has elapsed.

In the case where the standby time does not elapse, in operation 440, the processor 130 of the electronic device 100 may change the indicator as the determined standby time elapses. Thus, the processor 130 of the electronic device 100 may visually provide information about the remaining standby time through the indicator.

In an embodiment, when the speech of the user 50 is terminated, the electronic device 100 may terminate the acquisition of voice data, and determine the length of the standby time. The standby time then starts to run. While the determined standby time elapses, the electronic device 100 may change the indicator so as to visually transmit information about the remaining standby time to the user 50. An example thereof will be described below with reference to 710c in FIG. 7.

In an embodiment, while the determined standby time elapses, the user 50 may confirm or revise the converted text. The user 50 may see the remaining standby time through the indicator and may confirm or revise the converted text within the standby time.

In addition, while the determined standby time elapses, when receiving a revision input associated with the converted text, the processor 130 of the electronic device 100 may revise the converted text in response. Although such a text revision operation is not illustrated, the text revision operation may be performed between operation 440 and operation 450.

In the case where the standby time elapses in operation 450, in operation 460, the text may be transmitted to an external device. In the case where the text is revised, the revised text may be transmitted to the external device; in the case where the text is not revised, the text converted from the voice data may be transmitted to the external device.

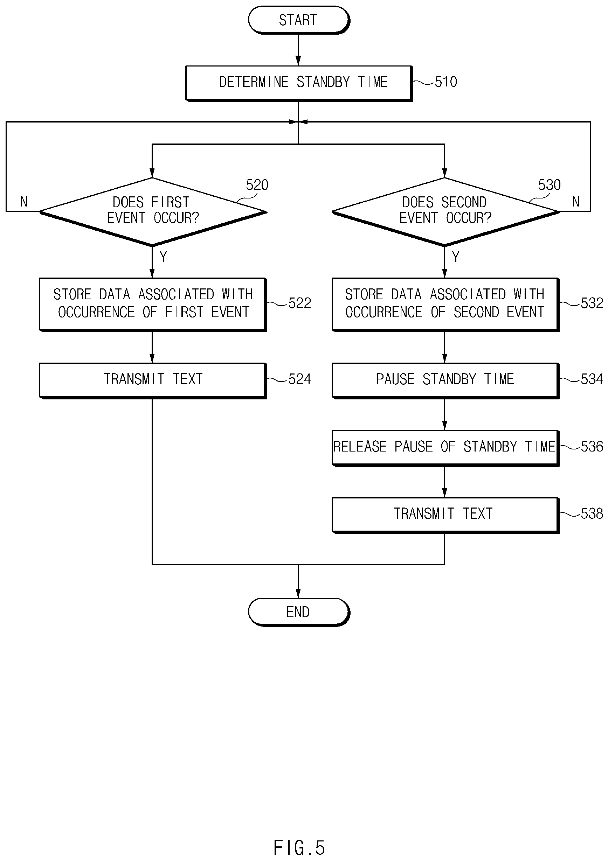

FIG. 5 is a flowchart illustrating a process to provide a standby time associated with a voice input, according to yet another embodiment of the present disclosure. The process of FIG. 5 may be performed by the electronic device 100 illustrated in FIG. 2.

In operation 510, the processor 130 of the electronic device 100 may obtain voice data and may determine a standby time. For example, the standby time may be the last calculated standby time before the acquisition of the voice data is terminated, or the standby time may be calculated in real time as the voice data is received. Accordingly, the length of the standby time may be revised after the acquisition of the voice data is terminated, or may be made in real time.

In operation 520 and operation 530, the processor 130 of the electronic device 100 may respectively sense the occurrences of a first event and a second event, while the standby time elapses.

The first event may mean an event in which the text to be entered is confirmed by the user 50. The text to be entered may be text converted from the voice data or may be text revised by the user 50. In an embodiment, when the first event occurs before the standby time elapses, the processor 130 of the electronic device 100 may transmit the determined text to an external device.

The electronic device 100 may provide the user 50 with an interface for generating the first event, and the user 50 may generate the first event through the interface. Before the determined standby time elapses, the user 50 may complete the confirmation and revision of the text converted from speech. In this case, the user 50 may finalize the text to be entered and may transmit the text to be entered, to the external device, by generating the first event.

The second event may mean an event that pauses the standby time. In an embodiment, when the second event occurs before the determined standby time elapses, the processor 130 of the electronic device 100 may pause the standby time.

The electronic device 100 may provide the user 50 with an interface for generating the second event, and the user 50 may generate the second event through the interface. In the case where it takes more time than the standby time to confirm and revise the text, the user 50 may pause the standby time. As such, the user 50 may delay the confirmation of the text to be entered.

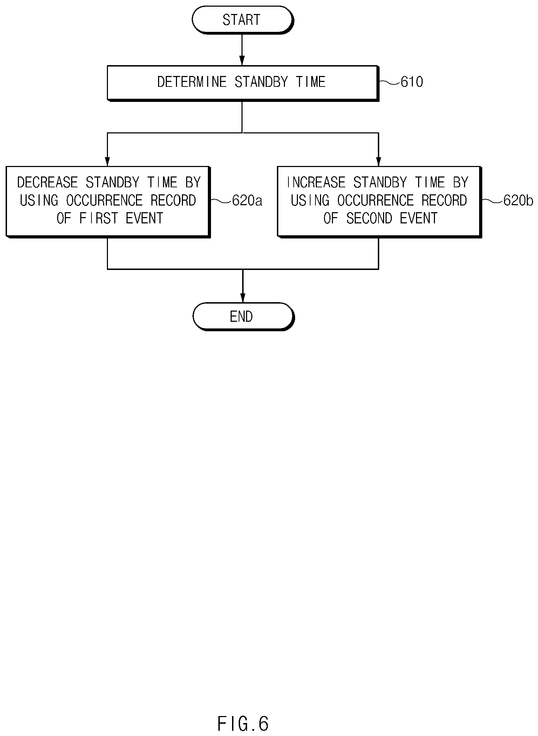

In an embodiment, the occurrence record of the first event and the occurrence record of the second event may be stored in the memory 150 of the electronic device 100. The occurrence record of the first event and the occurrence record of the second event may be used when the length of subsequent standby times are determined. The details thereof will be described below with reference to FIG. 6.

When the first event occurs, in operation 522, the processor 130 of the electronic device 100 may store data associated with the first event in the occurrence record of the first event.

In operation 524, the processor 130 of the electronic device 100 may transmit the confirmed text to be entered to an external device.

When the second event occurs, in operation 532, the processor 130 of the electronic device 100 may store data associated with the second event in the occurrence record of the second event; in operation 534, the processor 130 of the electronic device 100 may pause the standby time. When the standby time is paused, the user 50 may confirm or revise the converted text.

In operation 536, the pause of the standby time may be released. For example, the user 50 may directly release the pause through a particular user interface, or the electronic device 100 may automatically release the pause after a predetermined time period.

When the pause is released, in operation 538, the processor 130 of the electronic device 100 may transmit the confirmed text to be entered to an external device.

FIG. 6 is a flowchart illustrating a process to revise a standby time, according to an embodiment of the present disclosure. The process of FIG. 6 may be performed by the electronic device 100 illustrated in FIG. 2.

Operation 610 may correspond to operation 510 illustrated in FIG. 5. The duplicated description thereof is omitted.

When a standby time is determined, in operation 620a, the processor 130 of the electronic device 100 may decrease the determined standby time by using the occurrence record of the first event.

In operation 620b, the processor 130 of the electronic device 100 may increase the determined standby time by using the occurrence record of the second event. The first event occurrence record and the second event occurrence record may be stored in the memory 150 of the electronic device 100.

The first event occurs when the user 50 completes the confirmation and revision of the converted text before the expiration of the previous determined standby time. As such, when the user 50 frequently generates the first event, it may be determined that previous standby times are too long. Accordingly, the electronic device 100 may decrease the length of the current standby time based on the first event occurrence record.

The second event occurs when the user 50 requires more time than the previous determined standby times to confirm and revises the converted text. As such, when the user 50 frequently generates the second event, it may be determined that previous standby times are too short. Accordingly, the electronic device 100 may increase the length of the current standby time based on the second event occurrence record.

Thus, the electronic device 100 may store the first event occurrence record and the second event occurrence record and may modify subsequent standby time based on the first event occurrence record and the second event occurrence record, and then may provide the user 50 with the modified and customized standby time.

In other words, when the next voice input is obtained, the electronic device 100 may modify the standby time based on the stored first event occurrence record and the second event occurrence record. As such, the electronic device 100 may train the standby time to be customized for the specific user 50.

FIG. 7 illustrates a user interface, according to an embodiment of the present disclosure. In particular, the user interface of a message application, which transmits and receives instant messages, according to an embodiment of the present disclosure is illustrated.

Referring to FIG. 7, a user interface may include indicators 710a, 710b, and 710c associated with the standby time and a text display area 720. The user interface may be displayed on the display 120 of the electronic device 100 (e.g. on the execution screen of the message application).

The indicator according to an embodiment may be described as being divided into a time point ('a' time point) when reception of the voice data from the user 50 begins, a time point ('b' time point) when the reception of the voice data from the user 50 is completed, and a time point ('c' time point) after the determination of the length of the standby time is completed.

While the voice data is obtained at 'a' time point, the indicator 710a may be changed depending on the determined length of the standby time.

In an embodiment, the indicator 710a may include a plurality of icons, and the number of icons may be proportional to the determined standby time. For example, the processor 130 of the electronic device 100 may display the icons, the number of which is proportional to the determined length of the standby time, on the execution screen.

The illustrated indicator 710a may include a plurality of circular icons. As the speech content, for example, "hi" → "hi there" → "hi there how" → "hi there how are you?," increases, the standby time increases. Accordingly, the indicator 710a may include an increasingly larger number of circular icons. The user 50 may visually see that the determined length of the standby time is increasing.

At 'b' time point, the indicator 710b may be an indicator at a time point when the reception of the voice data is terminated. When the length of standby time is determined and is no longer changed by the inputted voice data, the indicator 710b showing the determined standby time may be displayed on the display 120.

At 'c' time point, while the determined standby time elapses, the indicator 710c may be changed depending on the remaining standby time.

In an embodiment, the indicator 710c may include a plurality of icons, and the number of icons may be proportional to the remaining standby time. For example, the processor 130 of the electronic device 100 may display icons, the number of which decreases as the standby time elapses, on the execution screen.

The illustrated indicator 710c may include a plurality of circular icons. Since the remaining standby time decreases as the standby time elapses, the number of circular icons included in the indicator 710c may decrease. When the standby time completely elapses, the number of circular icons may be zero, and text "hi there how are you?" displayed in the text area 720 may be transmitted to a counterpart terminal.

In an embodiment, the user interface at 'c' time point may further include a send button 730c. Before the standby time completely elapses, the user 50 may transmit the text displayed on text area 720 using the send button 730c. That is, prior to the elapse of the standby time, the user may confirm the text of the text area 720 as the text to be entered. For example, when the user 50 presses the send button 730c, the processor 130 of the electronic device 100 may sense the occurrence of the first event described above in connection with FIGs. 5-6 and may transmit the text to a counterpart terminal.

FIG. 8 illustrates an indicator, according to various embodiments of the present disclosure.

Referring to FIG. 8, the indicator may be changed depending on the standby time which is determined when voice data is obtained from the user 50. As illustrated in FIG. 8, as the standby time increases, the indicator may be changed in a progression indicated by the downward arrows.

According to one embodiment of the present disclosure, as the length of the standby time increases, the number of concentric circles of an indicator 800a may increase. In other embodiments, as the standby time increases, a circular icon included in each of the indicator 800b and indicator 800c may be filled with the distinguishing color. In yet other embodiments, as the standby time increases, the number of triangles of the indicator 800d may increase, and the spiral of an indicator 800f may be extended.

When the determination of the standby time is completed, the standby time then starts to run and the length decreases. While this occurs, each of the indicators 800a to 800f is changed in a direction indicated by the upwards arrow.

Thus, the user 50 may visually see through the indicators 800a-800f how the standby time increases and decreases. The user 50 may see how much the standby time is increasing and may adjust the amount of speech input. Furthermore, as the user 50 sees that the standby time is decreasing, he or she may hurry to confirm or revise the converted text or may pause the standby time.

FIG. 9 illustrates an execution screen of a message application, according to an embodiment of the present disclosure. In particular, the execution screen of a message application, which transmits and receives an instant message, according to an embodiment of the present disclosure is illustrated.

Referring to FIG. 9, a scenario in which a voice input is made in a message application is described as one example.

In screen 'a,' the user 50 receives a message from a counterparty saying "Hi, Let's go out tonight." The user 50 then wishes to input a response using voice input. For example, the user 50 may say "where to go?" The electronic device 100 may obtain voice data as the user 50 speaks. While the speech proceeds, the length of the standby time may be determined in real time, and an indicator 920a may be changed depending on the determined length of the standby time. The spoken voice may be converted into text and the text may be displayed in a text area 930a.

In screen 'b,' the speech of the user 50 may be terminated, and the determination of the length of the standby time may be completed. An indicator 920b may be changed as the determined standby time elapses.

In an embodiment, the user 50 may cause the text displayed to be transmitted to the counterpart terminal before the standby time elapses. In this case, the electronic device 100 may sense the occurrence of the above-mentioned first event.

For example, the processor 130 of the electronic device 100 may display a first icon on the execution screen of the message application. When a touch gesture associated with the first icon is input, the processor 130 of the electronic device 100 may sense the occurrence of the first event.

In screen 'b' example, the icon 940b may be the first icon. The user 50 may touch the icon 940b before the standby time elapses to transmit a displayed text in the text area 930b to the counterpart terminal. When the transmission is completed, as shown in screen 'c,' the transmitted text 950c may be displayed in the execution screen.

In another example, when a predetermined voice data is input, the processor 130 of the electronic device 100 may sense the occurrence of the first event.

In screen 'b,' the user 50 may utter predetermined sentence to transmit the text (910b). When voice data corresponding to the predetermined text is obtained, it may be determined to be a text transmission command. Accordingly, the electronic device 100 may transmit the displayed text to the counterpart terminal.

In an embodiment, before the standby time elapses, the user 50 may pause the standby time. In this case, the electronic device 100 may sense the occurrence of the second event described in FIG. 5.

For example, when a touch gesture associated with the displayed text area 930b is input, the processor 130 of the electronic device 100 may sense the occurrence of the second event.

In another example, when another predetermined voice data is input, the processor 130 of the electronic device 100 may sense the occurrence of the second event. The voice data corresponding to the predetermined text may be determined to be a command to pause the standby time. The voice data corresponding to the command to pause the standby time may be different from voice data corresponding to the transmission command.

In yet another example, the processor 130 of the electronic device 100 may display a second icon (not illustrated) different from the first icon, on the execution screen. When a touch gesture associated with the second icon is input, the processor 130 of the electronic device 100 may sense the occurrence of the second event.

In an embodiment, while the standby time elapses, the user 50 may revise the converted text. For example, when a touch gesture associated with the text area 930b displayed on the execution screen is input, the processor 130 of the electronic device 100 may wait for a revision input associated with the displayed text.

In screen 'b,' the user 50 may see the text area 930b during the standby time and may see that his or her speech input was incorrectly converted to "where do go?" For the purpose of revise the text, the user 50 may touch the text area 930b in which "where do go?" is displayed. The user 50 may then revise "where do go?" to "where to go?" In screen 'c,' "where to go?" can then be transmitted.

In an embodiment, while the standby time elapses, the user 50 may cancel the text input. For example, the processor 130 of the electronic device 100 may display a third icon on the execution screen. When a touch gesture associated with the third icon is input, the processor 130 of the electronic device 100 may cancel the input of the converted text.

Although the third icon is not illustrated, the execution screen may include a third icon for canceling a text input. For example, the user 50 may cancel the text input by touching the third icon.

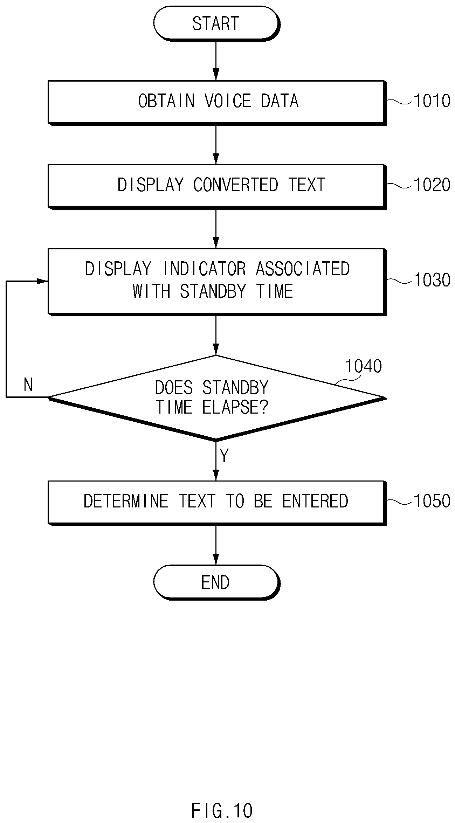

FIG. 10 is a flowchart illustrating a process to provide a standby time associated with a voice input, according to yet another embodiment. The process of FIG. 10 may be performed by the electronic device 100 illustrated in FIG. 2.

Operation 1010 to operation 1050 may correspond to operation 310 to operation 350 in FIG. 3. Furthermore, the method may be applied to all application programs requiring a text input.

In an embodiment, when obtaining voice data from the user 50 in operation 1010, the electronic device 100 may display the text converted from the voice data, in the display 120 in operation 1020. For example, the converted text may be displayed on the execution screen of an application program such as a message application. In an embodiment, in operation 1030, the electronic device 100 may display an indicator associated with a standby time determined based on the converted text, in the display 120. In operation 1040, the electronic device 100 may determine whether the standby time elapses. When the standby time elapses, in operation 1050, the electronic device 100 may determine the text to be entered.

In operation 1050, the electronic device 100 may determine the text to be entered into the application program. For example, the text to be entered may be the text converted from the voice data or may be a text revised from the converted text.

In another embodiment, the electronic device 100 may modify the determined standby time by using the pre-stored data. As described above in FIG. 6, the electronic device 100 may modify the determined standby time so as to be customized for the specific user 50. For example, when the user 50 determines the text to be entered before the standby time elapses or when the user 50 pauses the standby time, these events may be recorded and stored as data.

The electronic device 100 may also tentatively determine the length of the standby time and then modify the standby time by using the pre-stored data. For example, the pre-stored data may include a first event occurrence record and a second event occurrence record, as described above in connection with FIGs. 5-6. As such, the electronic device 100 may customize the standby time for individual users.

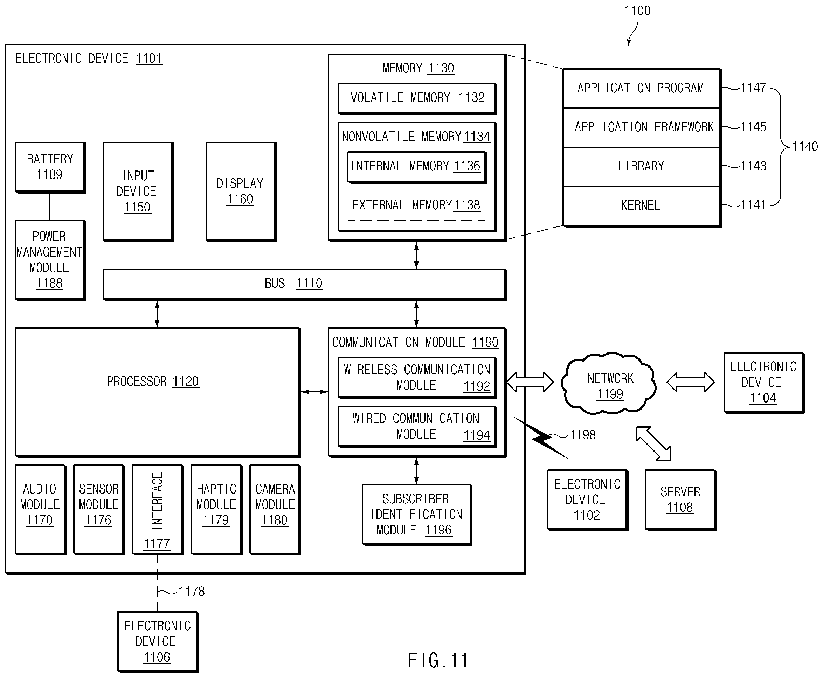

FIG. 11 is a block diagram illustrating an electronic device 1101 in a network environment 1100, according to an embodiment. According to one embodiment disclosed in the present disclosure, the electronic device 1101 may include various types of devices. For example, the electronic device 1101 may include at least one of a portable communication device (e.g., a smartphone), a computer device (e.g., a personal digital assistant (PDA), a tablet personal computers (PC), a laptop PC, a desktop PC, a workstation, or a server), a portable multimedia device (e.g., an e-book reader or an MP3 player), a portable medical device (e.g., a heart rate, blood glucose, blood pressure, or a thermometer), a camera, or a wearable device. A wearable device may include at least one of an accessory type of a device (e.g., a timepiece, a ring, a bracelet, an anklet, a necklace, glasses, a contact lens, or a head-mounted device (HMD)), one-piece fabric or clothes type of a device (e.g., electronic clothes), a body-attached type of a device (e.g., a skin pad or a tattoo), or a bio-implantable circuit. According to embodiments, the electronic device may include at least one of, for example, televisions (TVs), digital versatile disc (DVD) players, audio devices, audio accessory devices (e.g., a speaker, a headphone, or a headset), a refrigerator, an air conditioner, a cleaner, an oven, a microwave oven, a washing machine, an air cleaner, a set-top box, a home automation control panel, a security control panel, a game console, an electronic dictionary, an electronic key, a camcorder, or an electronic picture frame.

According to another embodiment, the electronic device may include at least one of a navigation device, a global navigation satellite system (GNSS), an event data recorder (EDR) (e.g., a black box for a car, a ship, or a plane), a vehicle infotainment device (e.g., a head-up display for a vehicle), an industrial or home robot, a drone, an automated teller machine (ATM), a point of sales (POS) device, a measurement device (e.g., a water meter, an electricity meter, or a gas meter), or Internet of things (e.g., a light bulb, a sprinkler device, a fire alarm, a thermostat, or a street lamp). According to an embodiment of the disclosure, the electronic device is not limited to the above-described devices. For example, similarly to a smartphone having function of measuring personal bio-information (e.g., a heart rate or blood glucose), the electronic device may provide functions of multiple devices in the complex manner. In the present disclosure, the term "user" used herein may refer to a person who uses the electronic device or may refer to a device (e.g., an artificial intelligence electronic device) that uses the electronic device.

Referring to FIG. 11, under the network environment 1100, the electronic device 1101 (e.g., the electronic device 100 of FIG. 2) may communicate with an electronic device 1102 through local wireless communication 1198 or may communication with an electronic device 1104 or a server 1108 through a network 1199. According to an embodiment, the electronic device 1101 may communicate with the electronic device 1104 through the server 1108.

According to an embodiment, the electronic device 1101 may include a bus 1110, a processor 1120 (e.g., the processor 130 of FIG. 2) a memory 1130, an input device 1150 (e.g., a micro-phone or a mouse), a display 1160, an audio module 1170, a sensor module 1176, an interface 1177, a haptic module 1179, a camera module 1180, a power management module 1188, a battery 1189, a communication module 1190, and a subscriber identification module 1196. According to an embodiment, the electronic device 1101 may not include at least one (e.g., the display 1160 or the camera module 1180) of the above-described elements or may further include other element(s).

For example, the bus 1110 may interconnect the above-described elements 1120 to 1190 and may include a circuit for conveying signals (e.g., a control message or data) between the above-described elements.

The processor 1120 may include one or more of a central processing unit (CPU), an application processor (AP), a graphic processing unit (GPU), an image signal processor (ISP) of a camera or a communication processor (CP). According to an embodiment, the processor 1120 may be implemented with a system on chip (SoC) or a system in package (SiP). For example, the processor 1120 may drive an operating system (OS) or an application to control at least one of another element (e.g., hardware or software element) connected to the processor 1120 and may process and compute various data. The processor 1120 may load a command or data, which is received from at least one of other elements (e.g., the communication module 1190), into a volatile memory 1132 to process the command or data and may store the process result data into a nonvolatile memory 1134.

The memory 1130 may include, for example, the volatile memory 1132 or the nonvolatile memory 1134. The volatile memory 1132 may include, for example, a random access memory (RAM) (e.g., a dynamic RAM (DRAM), a static RAM (SRAM), or a synchronous dynamic RAM (SDRAM)). The nonvolatile memory 1134 may include, for example, a one-time programmable read-only memory (OTPROM), a programmable read-only memory (PROM), an erasable programmable read-only memory (EPROM), an electrically erasable programmable read-only memory (EEPROM), a mask ROM, a flash ROM, a flash memory, a hard disk drive, or a solid-state drive (SSD). In addition, the nonvolatile memory 1134 may be configured in the form of an internal memory 1136 or the form of an external memory 1138 which is available through connection only if necessary, according to the connection with the electronic device 1101. The external memory 1138 may further include a flash drive such as compact flash (CF), secure digital (SD), micro secure digital (Micro-SD), mini secure digital (Mini-SD), extreme digital (xD), a multimedia card (MMC), or a memory stick. The external memory 1138 may be operatively or physically connected with the electronic device 1101 in a wired manner (e.g., a cable or a universal serial bus (USB)) or a wireless (e.g., Bluetooth) manner.

For example, the memory 1130 may store, for example, at least one different software element, such as an instruction or data associated with the program 1140, of the electronic device 1101. The program 1140 may include, for example, a kernel 1141, a library 1143, an application framework 1145 or an application program (interchangeably, "application") 1147.

The input device 1150 may include a microphone, a mouse, or a keyboard. According to an embodiment, the keyboard may include a keyboard physically connected or a keyboard virtually displayed through the display 1160.

The display 1160 may include a display, a hologram device or a projector, and a control circuit to control a relevant device. The screen may include, for example, a liquid crystal display (LCD), a light emitting diode (LED) display, an organic LED (OLED) display, a microelectromechanical systems (MEMS) display, or an electronic paper display. According to an embodiment, the display may be flexibly, transparently, or wearably implemented. The display may include a touch circuitry, which is able to detect a user's input such as a gesture input, a proximity input, or a hovering input or a pressure sensor (interchangeably, a force sensor) which is able to measure the intensity of the pressure by the touch. The touch circuit or the pressure sensor may be implemented integrally with the display or may be implemented with at least one sensor separately from the display. The hologram device may show a stereoscopic image in a space using interference of light. The projector may project light onto a screen to display an image. The screen may be located inside or outside the electronic device 1101.

The audio module 1170 may convert, for example, from a sound into an electrical signal or from an electrical signal into the sound. According to an embodiment, the audio module 1170 may acquire sound through the input device 1150 (e.g., a microphone) or may output sound through an output device (not illustrated) (e.g., a speaker or a receiver) included in the electronic device 1101, an external electronic device (e.g., the electronic device 1102 (e.g., a wireless speaker or a wireless headphone)) or an electronic device 1106 (e.g., a wired speaker or a wired headphone) connected with the electronic device 1101

The sensor module 1176 may measure or detect, for example, an internal operating state (e.g., power or temperature) or an external environment state (e.g., an altitude, a humidity, or brightness) of the electronic device 1101 to generate an electrical signal or a data value corresponding to the information of the measured state or the detected state. The sensor module 1176 may include, for example, at least one of a gesture sensor, a gyro sensor, a barometric pressure sensor, a magnetic sensor, an acceleration sensor, a grip sensor, a proximity sensor, a color sensor (e.g., a red, green, blue (RGB) sensor), an infrared sensor, a biometric sensor (e.g., an iris sensor, a fingerprint senor, a heartbeat rate monitoring (HRM) sensor, an e-nose sensor, an electromyography (EMG) sensor, an electroencephalogram (EEG) sensor, an electrocardiogram (ECG) sensor, a temperature sensor, a humidity sensor, an illuminance sensor, or an UV sensor. The sensor module 1176 may further include a control circuit for controlling at least one or more sensors included therein. According to an embodiment, the electronic device 1101 may control the sensor module 1176 by using the processor 1120 or a processor (e.g., a sensor hub) separate from the processor 1120. In the case that the separate processor (e.g., a sensor hub) is used, while the processor 1120 is in a sleep state, the electronic device 1101 may control at least part of the operation or the state of the sensor module 1176 by the operation of the separate processor without awakening the processor 1120.

According to an embodiment, the interface 1177 may include a high definition multimedia interface (HDMI), a universal serial bus (USB), an optical interface, a recommended standard 232 (RS-232), a D-subminiature (D-sub), a mobile high-definition link (MHL) interface, a SD card/MMC interface, or an audio interface. A connector 1178 may physically connect the electronic device 1101 and the electronic device 1106. According to an embodiment, the connector 1178 may include, for example, an USB connector, an SD card/MMC connector, or an audio connector (e.g., a headphone connector).

The haptic module 1179 may convert an electrical signal into mechanical stimulation (e.g., vibration or motion) or into electrical stimulation. For example, the haptic module 1179 may apply tactile or kinesthetic stimulation to a user. The haptic module 1179 may include, for example, a motor, a piezoelectric element, or an electric stimulator.

The camera module 1180 may capture, for example, a still image and a moving picture. According to an embodiment, the camera module 1180 may include at least one lens (e.g., a wide-angle lens and a telephoto lens, or a front lens and a rear lens), an image sensor, an image signal processor, or a flash (e.g., a light emitting diode or a xenon lamp).

The power management module 1188, which is to manage the power of the electronic device 1101, may constitute at least a portion of a power management integrated circuit (PMIC).

The battery 1189 may include a primary cell, a secondary cell, or a fuel cell and may be recharged by an external power source to supply power at least one element of the electronic device 1101.

The communication module 1190 may establish a communication channel between the electronic device 1101 and an external device (e.g., the first external electronic device 1102, the second external electronic device 1104, or the server 1108). The communication module 1190 may support wired communication or wireless communication through the established communication channel. According to an embodiment, the communication module 1190 may include a wireless communication module 1192 or a wired communication module 1194. The communication module 1190 may communicate with the external device through a first network 1198 (e.g. a wireless local area network such as Bluetooth or infrared data association (IrDA)) or a second network 1199 (e.g., a wireless wide area network such as a cellular network) through a relevant module among the wireless communication module 1192 or the wired communication module 1194.

The wireless communication module 1192 may support, for example, cellular communication, local wireless communication, and global navigation satellite system (GNSS) communication. The cellular communication may include, for example, long-term evolution (LTE), LTE Advance (LTE-A), code division multiple access (CMA), wideband CDMA (WCDMA), universal mobile telecommunications system (UMTS), wireless broadband (WiBro), or global system for mobile communications (GSM). The local wireless communication may include wireless fidelity (Wi-Fi), Wi-Fi Direct, light fidelity (Li-Fi), Bluetooth, Bluetooth low energy (BLE), Zigbee, near field communication (NFC), magnetic secure transmission (MST), radio frequency (RF), or a body area network (BAN). The GNSS may include at least one of a global positioning system (GPS), a global navigation satellite system (Glonass), Beidou Navigation Satellite System (Beidou), the European global satellite-based navigation system (Galileo), or the like. In the present disclosure, "GPS" and "GNSS" may be interchangeably used.

According to an embodiment, when the wireless communication module 1192 supports cellar communication, the wireless communication module 1192 may, for example, identify or authenticate the electronic device 1101 within a communication network using the subscriber identification module (e.g., a SIM card) 1196. According to an embodiment, the wireless communication module 1192 may include a communication processor (CP) separate from the processor 2820 (e.g., an application processor (AP). In this case, the communication processor may perform at least a portion of functions associated with at least one of elements 1110 to 1196 of the electronic device 1101 in substitute for the processor 1120 when the processor 1120 is in an inactive (sleep) state, and together with the processor 1120 when the processor 1120 is in an active state. According to an embodiment, the wireless communication module 1192 may include a plurality of communication modules, each supporting only a relevant communication scheme among cellular communication, short-range wireless communication, or a GNSS communication scheme.

The wired communication module 1194 may include, for example, include a local area network (LAN) service, a power line communication, or a plain old telephone service (POTS).

For example, the first network 1198 may employ, for example, Wi-Fi direct or Bluetooth for transmitting or receiving instructions or data through wireless direct connection between the electronic device 1101 and the first external electronic device 1102. The second network 1199 may include a telecommunication network (e.g., a computer network such as a LAN or a WAN, the Internet or a telephone network) for transmitting or receiving instructions or data between the electronic device 1101 and the second electronic device 1104.

According to embodiments, the instructions or the data may be transmitted or received between the electronic device 1101 and the second external electronic device 1104 through the server 1108 connected with the second network. Each of the external first and second external electronic devices 1102 and 1104 may be a device of which the type is different from or the same as that of the electronic device 1101. According to various embodiments, all or a part of operations that the electronic device 1101 will perform may be executed by another or a plurality of electronic devices (e.g., the electronic devices 1102 and 1104 or the server 1108). According to an embodiment, in the case that the electronic device 1101 executes any function or service automatically or in response to a request, the electronic device 1101 may not perform the function or the service internally, but may alternatively or additionally transmit requests for at least a part of a function associated with the electronic device 1101 to any other device (e.g., the electronic device 1102 or 1104 or the server 1108). The other electronic device (e.g., the electronic device 1102 or 1104 or the server 1108) may execute the requested function or additional function and may transmit the execution result to the electronic device 1101. The electronic device 1101 may provide the requested function or service using the received result or may additionally process the received result to provide the requested function or service. To this end, for example, cloud computing, distributed computing, or client-server computing may be used.

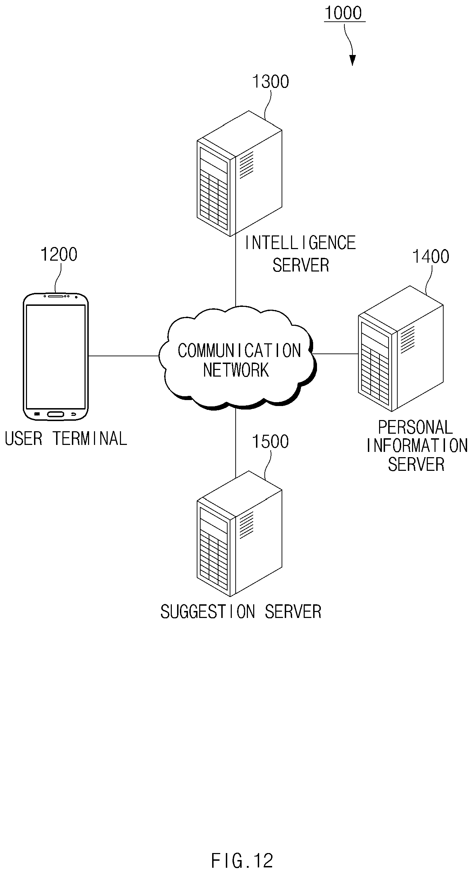

FIG. 12 is a diagram illustrating an integrated intelligent system, according to an embodiment of the present disclosure.

Referring to FIG. 12, an integrated intelligent system 1000 may include a user terminal 1200 (e.g., the electronic device of FIG. 1), an intelligence server 1300, a personal information server 1400, or a suggestion server 1500.

The user terminal 1200 may provide services for a user via apps or application programs such as alarm apps, message apps, picture (gallery) apps, etc., stored in the user terminal 1200. For example, the user terminal 1200 may execute and operate an app together with an intelligence app or a speech recognition app stored in the user terminal 1200. A user input for launching and operating the app may be received. For example, the user input may be received through a physical button, a touch pad, a voice input, a remote input, or the like. According to an embodiment, various types of Internet-connected devices, such as mobile phones, smartphones, personal digital assistants (PDAs), notebook computers, and the like may be the user terminal 1200.

According to an embodiment, the user terminal 1200 may receive user speech as a user input. The user terminal 1200 may receive the user speech and may generate an instruction for operating an app based on the user speech. As such, the user terminal 1200 may operate the app by using instructions generated from user speech.

The intelligence server 1300 may receive a voice input of the user from the user terminal 1200 over a communication network and may convert the voice input to text data. In another embodiment, the intelligence server 1300 may generate or select a path rule based on the text data. The path rule may include information about an action (e.g. an operation or a task) for performing the function of the app or information about a parameter necessary to perform the action. In addition, the path rule may include the order of actions to be performed in the app. The user terminal 1200 may receive the path rule, may select an app depending on the path rule, and may execute action(s) included in the path rule in the selected app.

The user terminal 1200 may execute the action(s) and may display a screen corresponding to the executed action. Alternatively, the user terminal 1200 may execute the action and may not display the result obtained by executing the action. For example, the user terminal 1200 may execute a plurality of actions and may display only the result of some of the actions. In another example, the user terminal 1200 may display only the result of the last action in the display. And in yet another example, the user terminal 1200 may display the results only after receiving user input to display the results.

The personal information server 1400 may include a database in which user information is stored. For example, the personal information server 1400 may receive the user information (e.g., context information, information about execution of an app, or the like) from the user terminal 1200 and may store the user information in the database. The intelligence server 1300 may receive the user information from the personal information server 1400 over the communication network and may generate a path rule associated with the user input based on the user information. According to an embodiment, the user terminal 1200 may receive the user information from the personal information server 1400 over the communication network, and may use the user information as information for managing the database.

The suggestion server 1500 may include a database storing information about a function in a terminal, information of an application, or a function to be provided. For example, the suggestion server 1500 may include a database associated with a function that a user utilizes by receiving the user information of the user terminal 1200 from the personal information server 1400. The user terminal 1200 may receive information about the function to be provided from the suggestion server 1500 over the communication network and may provide the information to the user.

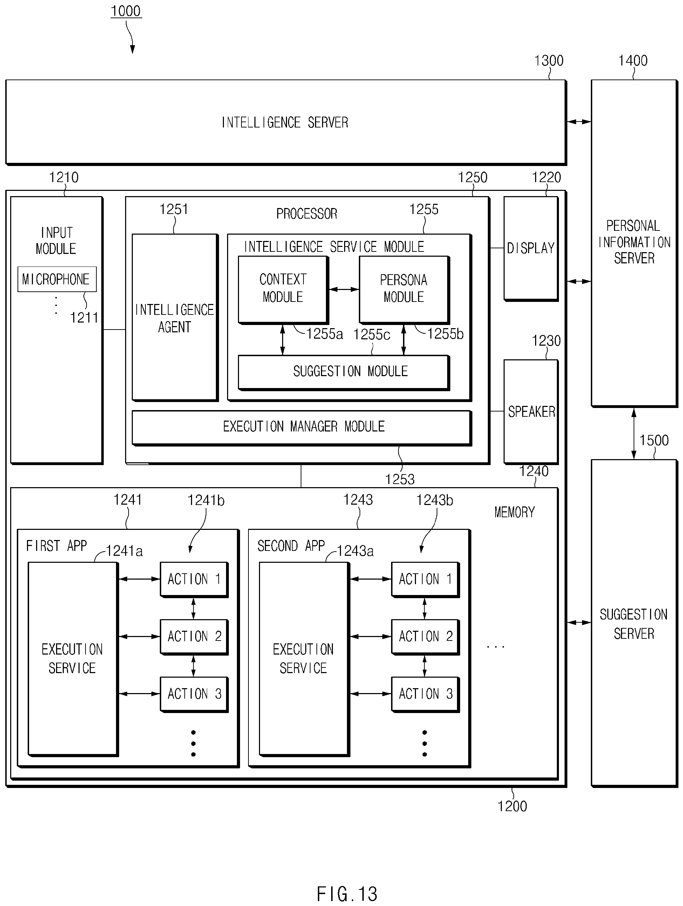

FIG. 13 is a block diagram illustrating a user terminal of an integrated intelligent system, according to an embodiment of the present disclosure.

Referring to FIG. 13, the user terminal 1200 may include an input module 1210, a display 1220, a speaker 1230, a memory 1240, or a processor 1250. The user terminal 1200 may further include a housing, and elements of the user terminal 1200 may be seated in the housing or may be positioned on the housing.

According to an embodiment, the input module 1210 may receive a user input from a user. For example, the input module 1210 may receive the user input from a connected external device (e.g., a keyboard or a headset). In another example, the input module 1210 may include a touch screen (e.g., a touch screen display) coupled to the display 1220. In yet another example, the input module 1210 may include one or more hardware or physical keys disposed in the user terminal 1200 (or the housing of the user terminal 1200).

According to an embodiment, the input module 1210 may include a microphone that is capable of receiving user speech and converting the speech to a voice signal. For example, the input module 1210 may include a speech input system and may receive the speech of the user as a voice signal through the speech input system.

According to an embodiment, the display 1220 may display images, videos, and/or execution screens of applications. For example, the display 1220 may display graphic user interfaces (GUIs) of apps.

According to an embodiment, the speaker 1230 may output voice signals. For example, the speaker 1230 may output voice signals generated in the user terminal 1200.

According to an embodiment, the memory 1240 may store a plurality of apps 1241 and 1243. The plurality of apps 1241 and 1243 stored in the memory 1240 may be selected, launched, and instructed to perform actions depending on the user input.

According to an embodiment, the memory 1240 may include a database capable of storing information necessary for recognizing user input. For example, the memory 1240 may include a log database capable of storing log information. For another example, the memory 1240 may include a persona database capable of storing user information.

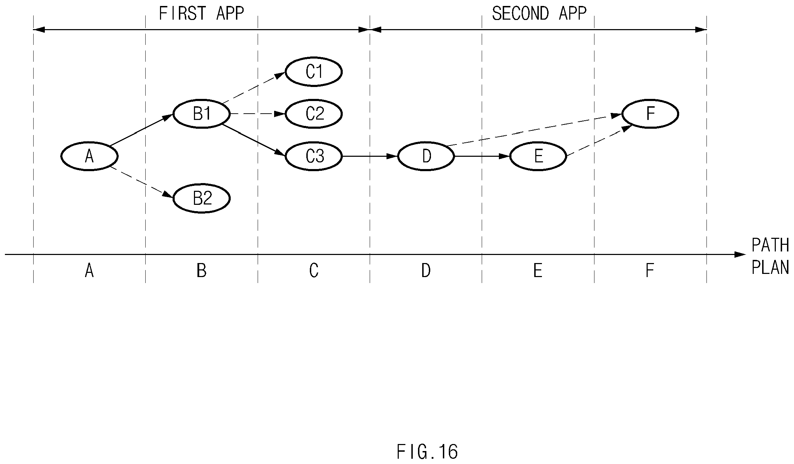

According to an embodiment, the memory 1240 may store the plurality of apps 1241 and 1243, and the plurality of apps 1241 and 1243 may be loaded to run. For example, the plurality of apps 1241 and 1243 stored in the memory 1240 may be loaded by an execution manager module 1253 of the processor 1250 so that the plurality of apps 1241 and 1243 are executed. The plurality of apps 1241 and 1243 may include execution services 1241a and 1243a performing a function or a plurality of actions (or unit actions, described below in connection with FIG. 16) 1241b and 1243b. The execution services 1241a and 1243a may be generated by the execution manager module 1253 of the processor 1250 and then may execute the plurality of actions 1241b and 1243b.

According to an embodiment, when the actions 1241b and 1243b of the apps 1241 and 1243 are executed, execution state screens according to the execution of the actions 1241b and 1243b may be displayed in the display 1220. For example, an execution state screen may show that the actions 1241b and 1243b are completed. In another example, the execution state screen may show partial completion of the actions 1241b and 1243b, for example when parameters necessary for the actions 1241b and 1243b are not yet input.

According to an embodiment, the execution services 1241a and 1243a may execute the actions 1241b and 1243b depending on a path rule. For example, the execution services 1241a and 1243a may be activated by the execution manager module 1253, may receive an execution request from the execution manager module 1253 depending on the path rule, and may execute the actions 1241b and 1243b of the apps 1241 and 1243 depending on the execution request. When the execution of the actions 1241b and 1243b is completed, the execution services 1241a and 1243a may transmit completion information to the execution manager module 1253.

According to an embodiment, in the case where the plurality of the actions 1241b and 1243b are respectively executed in the apps 1241 and 1243, the plurality of the actions 1241b and 1243b may be sequentially executed. When the execution of one action (action 1) is completed, the execution services 1241a and 1243a may open the next action (action 2) and may transmit completion information to the execution manager module 1253. Here, it is understood that opening a particular action is to change a state of the action to an executable state or to prepare the execution of the action. In other words, when the action is not opened, it may be not executed. When the completion information is received, the execution manager module 1253 may transmit an execution request for the next actions 1241b and 1243b (e.g. action 2) to the execution service 1241a and 1243a. According to an embodiment, in the case where the plurality of apps 1241 and 1243 are executed, the plurality of apps 1241 and 1243 may be sequentially executed. For example, when receiving the completion information after the execution of the last action of the first app 1241 is executed, the execution manager module 1253 may transmit the execution request of the first action of the second app 1243 to the execution service 1243a.

According to an embodiment, in the case where the plurality of the actions 1241b and 1243b are executed in the apps 1241 and 1243, result screens of each of the executed plurality of the actions 1241b and 1243b may be displayed in the display 1220. According to another embodiment, result screens of only some of the executed plurality of the actions 1241b and 1243b may be displayed in the display 1220.

According to an embodiment, the memory 1240 may store an intelligence app (e.g., a speech recognition app) operating in conjunction with an intelligence agent 1251. The app operating in conjunction with the intelligence agent 1251 may receive and process the speech of the user into a voice signal. According to an embodiment, the app operating in conjunction with the intelligence agent 1251 may be operated by a specific input (e.g., an input through a hardware key, an input through a touch screen, or a specific voice input) input through the input module 1210.

According to an embodiment, the processor 1250 may control overall operations of the user terminal 1200. For example, the processor 1250 may control the input module 1210 to receive the user input. The processor 1250 may control the display 1220 to display images. The processor 1250 may control the speaker 1230 to output a voice signal. The processor 1250 may control the memory 1240 to read or store information.

According to an embodiment, the processor 1250 may include the intelligence agent 1251, the execution manager module 1253, or an intelligence service module 1255. In an embodiment, the processor 1250 may drive the intelligence agent 1251, the execution manager module 1253, or the intelligence service module 1255 by executing corresponding instructions stored in the memory 1240. Modules described in various embodiments of the present disclosure may be implemented by hardware or by software. In various embodiments of the present disclosure, it is understood that the actions executed by the intelligence agent 1251, the execution manager module 1253, or the intelligence service module 1255 are actions executed by the processor 1250.

According to an embodiment, the intelligence agent 1251 may generate an instruction for operating app 1241 or 1243 based on the voice signal received as the user input. According to an embodiment, the execution manager module 1253 may receive the generated instruction from the intelligence agent 1251, and may select, launch, and operate the apps 1241 or 1243 stored in the memory 1240. According to an embodiment, the intelligence service module 1255 may manage information of the user and may use the information of the user to process the user input.

The intelligence agent 1251 may transmit the user input received through the input module 1210 to the intelligence server 1300.

According to an embodiment, before transmitting the user input to the intelligence server 1300, the intelligence agent 1251 may pre-process the user input. According to an embodiment, to pre-process the user input, the intelligence agent 1251 may include an adaptive echo canceller (AEC) module, a noise suppression (NS) module, an end-point detection (EPD) module, or an automatic gain control (AGC) module. The AEC may remove echoes included in the user input. The NS module may suppress background noise included in the user input. The EPD module may detect an end-point of the user's voice included in the user input so as to determine the part of the input where user voice is present. The AGC module may adjust the volume of the user input so as to be suitable for processing. According to an embodiment, for better performance, the intelligence agent 1251 may include all the pre-processing elements described above. However, in another embodiment, to preserve battery life, the intelligence agent 1251 may only operation some of the pre-processing elements.

According to an embodiment, the intelligence agent 1251 may include a wake up recognition module recognizing a call by the user. Using the speech recognition module, the wake up recognition module may recognize a wake up instruction from the user. In the case where the wake up recognition module receives the wake up instruction, the wake up recognition module may activate the intelligence agent 1251 to receive additional user input. According to an embodiment, the wake up recognition module of the intelligence agent 1251 may be implemented with a low-power processor that includes an audio codec. According to another embodiment, the intelligence agent 1251 may be activated when user input is entered through a hardware key. In the case where the intelligence agent 1251 is activated, an intelligence app (e.g., a speech recognition app) operating in conjunction with the intelligence agent 1251 may be executed.

According to an embodiment, the intelligence agent 1251 may include a speech recognition module for converting voice input to text. The speech recognition module may recognize the user input for executing an action in an app. For example, the speech recognition module may recognize a voice input to wake apps 1241 and 1443, or a voice input to perform a certain function, such as a "click" to execute a capture function in a camera app. Thus, the speech recognition module may recognize and rapidly process user instructions for functions executable by the user terminal 1200. According to an embodiment, the speech recognition module for executing the user input of the intelligence agent 1251 may be implemented with an app processor.

According to an embodiment, the speech recognition module (which may include the speech recognition module of a wake up module) of the intelligence agent 1251 may recognize the user input by using an algorithm for recognizing voice. For example, the algorithm for recognizing voice may be a hidden Markov model (HMM) algorithm, an artificial neural network (ANN) algorithm, or a dynamic time warping (DTW) algorithm.

According to an embodiment, the intelligence agent 1251 may change the voice input of the user to text data. According to an embodiment, the intelligence agent 1251 may transmit the voice of the user to the intelligence server 1300. The intelligence server 1300 the converts the voice input into text data and transmits the text data to the intelligence agent 1251. Then, the intelligence agent 1251 may display the text data in the display 1220.

According to an embodiment, the intelligence agent 1251 may receive a path rule from the intelligence server 1300. According to an embodiment, the intelligence agent 1251 may transmit the path rule to the execution manager module 1253.

According to an embodiment, the intelligence agent 1251 may transmit the execution result log according to the path rule to the intelligence service module 1255, and the transmitted execution result log may be accumulated and managed as preference information of the user in a persona module 155b.

According to an embodiment, the execution manager module 1253 may receive the path rule from the intelligence agent 1251 to execute the apps 1241 and 1243 and may instruct the apps 1241 and 1243 to execute the actions 1241b and 1243b, which are included in the path rule. For example, the execution manager module 1253 may transmit instruction information for executing the actions 1241b and 1243b to the apps 1241 and 1243 and may receive completion information of the actions 1241b and 1243b from the apps 1241 and 1243.

According to an embodiment, the execution manager module 1253 may transmit or receive the instruction information for executing the actions 1241b and 1243b of the apps 1241 and 1243 between the intelligence agent 1251 and the apps 1241 and 1243. The execution manager module 1253 may bind the apps 1241 and 1243 to be executed depending on the path rule and may transmit the instruction information of the actions 1241b and 1243b included in the path rule to the apps 1241 and 1243. For example, the execution manager module 1253 may sequentially transmit the actions 1241b and 1243b included in the path rule to the apps 1241 and 1243 and may sequentially execute the actions 1241b and 1243b of the apps 1241 and 1243 depending on the path rule.

According to an embodiment, the execution manager module 1253 may manage execution states of the actions 1241b and 1243b of the apps 1241 and 1243. For example, the execution manager module 1253 may receive information about the execution states of the actions 1241b and 1243b from the apps 1241 and 1243. In the case where the actions 1241b and 1243b have partially landed (e.g., the actions 1241b and 1243b are waiting for the input of a necessary parameter), the execution manager module 1253 may transmit information about the partial landing to the intelligence agent 1251. The intelligence agent 1251 may then request the user to input necessary information. In another example, in the case where the actions 1241b and 1243b are operating, speech may be received from the user, and the execution manager module 1253 may transmit information about the execution states of the apps 1241 and 1243 to the intelligence agent 1251. Using the intelligence server 1300, the intelligence agent 1251 may parse parameter information from the speech of the user and may transmit the parameter information to the execution manager module 1253. The execution manager module 1253 may then change a parameter of each of the actions 1241b and 1243b using the parameter information from the user speech.

According to an embodiment, the execution manager module 1253 may transmit the parameter information included in the path rule to the apps 1241 and 1243. In the case where the plurality of apps 1241 and 1243 are sequentially executed depending on the path rule, the execution manager module 1253 may transmit the parameter information included in the path rule first to one app and then to another app.

According to an embodiment, the execution manager module 1253 may receive a plurality of path rules. The execution manager module 1253 may select a plurality of path rules based on the speech of the user. For example, in the case where the user speech specifies the app 1241 executing the action 1241b but does not specify the app 1243 executing the action 1243b, the execution manager module 1253 may receive a plurality of different path rules in which the same app 1241 (e.g., an gallery app) executes the action 1241b but different apps 1243 (e.g., a message app or a Telegram app) executes the action 1243b. The execution manager module 1253 may then execute the action 1241b using the app 1241. The execution manager module 1253 may also a state screen prompting the user to select an app to execute the action 1243b.

According to an embodiment, the intelligence service module 1255 may include a context module 155a, a persona module 155b, or a suggestion module 155c.

The context module 155a may collect current states of the apps 1241 and 1243 from the apps 1241 and 1243. For example, the context module 155a may receive context information indicating the current states of the apps 1241 and 1243.

The persona module 155b may manage personal information of the user. For example, the persona module 155b may collect the usage information and the execution results of the user terminal 1200.

The suggestion module 155c may predict the intent of the user in order to recommend to the user execution instructions for the terminal 1200. For example, the suggestion module 155c may recommend instructions to the user in consideration of the current state (e.g., a time, a place, context, or an app) of the user.

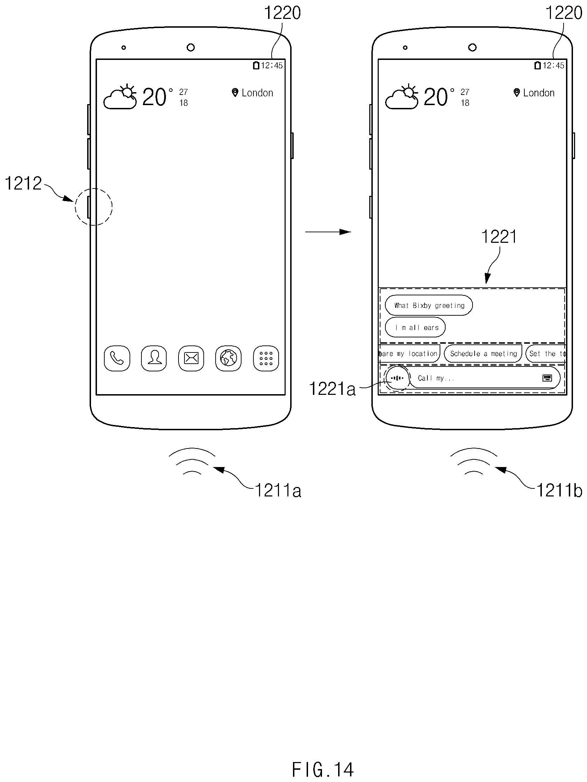

FIG. 14 is view illustrating when an intelligence app of a user terminal is executed, according to an embodiment of the present disclosure.

FIG. 14 illustrates that the user terminal 1200 receives a user input to execute an intelligence app (e.g., a speech recognition app) operating in conjunction with the intelligence agent 1251.

According to an embodiment, the user terminal 1200 may execute the intelligence app for recognizing voice inputs through a hardware key 1212. For example, in the case where the user terminal 1200 receives the user input through the hardware key 1212, the user terminal 1200 may display a UI 1221 of the intelligence app in the display 1220. The user may then touch a speech recognition button 1221a of the UI 1221 of the intelligence app for the purpose of entering a voice input 1211b. Alternatively, while continuously pressing the hardware key 1212, the user may enter the voice input 1211b.

According to an embodiment, the user terminal 1200 may execute the intelligence app for recognizing voice inputs through the microphone 1211. For example, in the case where a specified voice input 1211a (e.g., wake up!) is entered through the microphone 1211, the user terminal 1200 may display the UI 1221 of the intelligence app in the display 1220.

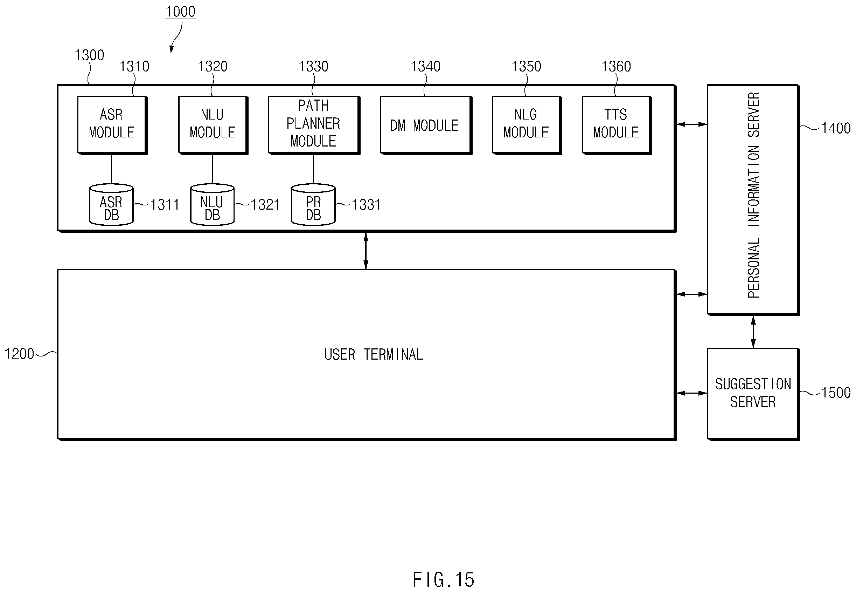

FIG. 15 is a block diagram illustrating an intelligence server of an integrated intelligent system, according to an embodiment of the present disclosure.

Referring to FIG. 15, the intelligence server 1300 may include an automatic speech recognition (ASR) module 1310, a natural language understanding (NLU) module 1320, a path planner module 1330, a dialogue manager (DM) module 1340, a natural language generator (NLG) module 1350, or a text to speech (TTS) module 1360.

The NLU module 1320 or the path planner module 1330 of the intelligence server 1300 may generate a path rule.

According to an embodiment, the ASR module 1310 may convert the user input received from the user terminal 1200 from speech to text data.

For example, the ASR module 1310 may include a speech recognition module. The speech recognition module may include an acoustic model and a language model. For example, the acoustic model may include information associated with speech, and the language model may include unit phoneme information and information about a combination of unit phoneme information. The speech recognition module may convert user speech to text data by using the information associated with speech and unit phoneme information. For example, the information about the acoustic model and the language model may be stored in an automatic speech recognition database (ASR DB) 1311.

According to an embodiment, the NLU module 1320 may derive user intent by performing syntactic analysis or semantic analysis. The syntactic analysis may divide the user input into syntactic units (e.g., words, phrases, morphemes, and the like) and determine which syntactic elements the divided units have. The semantic analysis may be performed by using semantic matching, rule matching, formula matching, or the like. As such, the NLU module 1320 may obtain characteristics such as domain, intent, or parameter (or slot) so that the NLU module 1320 may derive intent.

According to an embodiment, the NLU module 1320 may determine the intent of the user and corresponding parameters by using a matching rule that is divided into domain, intent, and parameter (or slot) necessary to understand the intent. For example, one domain such as an alarm may include a plurality of intents such as alarm settings, alarm cancellation, and the like, and one intent may include a plurality of parameters such as time for the alarm, the number of iterations, the alarm sound, and the like. The plurality of rules may include one or more necessary parameters. The matching rule may be stored in a natural language understanding database (NLU DB) 1321.

According to an embodiment, the NLU module 1320 may understand the meaning of words extracted from a user input by using linguistic features (e.g., grammatical elements) such as morphemes, phrases, and the like and may match the meaning of the grasped words to the domain and intent to determine user intent. For example, the NLU module 1320 may calculate how many words extracted from the user input are included in each of the domain and the intent, for the purpose of determining the user intent. According to an embodiment, the NLU module 1320 may determine a parameter of the user input by using the words. According to an embodiment, the NLU module 1320 may determine the user intent by using the NLU DB 1321 storing the linguistic features that are used to understand the intent of the user input. According to another embodiment, the NLU module 1320 may determine the user intent by using a personal language model (PLM). For example, the NLU module 1320 may determine the user intent by using the personalized information (e.g., a contact list or a music list). For example, the PLM may be stored in the NLU DB 1321. According to an embodiment, the ASR module 1310 as well as the NLU module 1320 may recognize the voice of the user with reference to the PLM stored in the NLU DB 1321.

According to an embodiment, the NLU module 1320 may generate a path rule based on the intent of the user input and the parameter. For example, the NLU module 1320 may select an app to be executed, based on the intent of the user input and may determine an action to be executed in the selected app. The NLU module 1320 may determine the parameter corresponding to the determined action to generate the path rule. According to an embodiment, the path rule generated by the NLU module 1320 may include information about the app to be executed, the action to be executed in the app, and parameter(s) necessary to execute the action.

According to an embodiment, the NLU module 1320 may generate one path rule, or a plurality of path rules based on the intent of the user input and corresponding parameters. For example, the NLU module 1320 may receive a path rule set corresponding to the user terminal 1200 from the path planner module 1330 and may map the intent of the user input and corresponding parameters to the received path rule set for the purpose of determining the path rule.

According to another embodiment, the NLU module 1320 may determine the app to be executed, the action to be executed in the app, and parameters) necessary to execute the action based on the intent of the user input and corresponding parameters for the purpose of generating one path rule or a plurality of path rules. For example, depending on the intent of the user input, and for the purpose of generating the path rule, the NLU module 1320 may arrange the app to be executed and the action to be executed in the app by using information of the user terminal 1200 in the form of ontology or a graph model. The generated path rule may be stored in a path rule database (PR DB) 1331 controlled by the path planner module 1330. The generated path rule may be added to a path rule set of the PR DB 1331.

According to an embodiment, the NLU module 1320 may select at least one path rule of the generated plurality of path rules. For example, the NLU module 1320 may select an optimal path rule of the plurality of path rules. In another example, in the case where only a part of action is specified based on the user speech, the NLU module 1320 may select a plurality of path rules. The NLU module 1320 may determine one path rule of the plurality of path rules depending on an additional input of the user.

According to an embodiment, the NLU module 1320 may transmit the path rule to the user terminal 1200 in response to a request for the user input. For example, the NLU module 1320 may transmit one path rule corresponding to the user input to the user terminal 1200. For another example, the NLU module 1320 may transmit the plurality of path rules corresponding to the user input to the user terminal 1200. For example, in the case where only a part of action is specified based on the user speech, a plurality of path rules may be generated by the NLU module 1320.

According to an embodiment, the path planner module 1330 may select at least one path rule from among the plurality of path rules.

According to an embodiment, the path planner module 1330 may transmit a path rule set including the plurality of path rules to the NLU module 1320. The plurality of path rules of the path rule set may be stored in the PR DB 1331 connected to the path planner module 1330. The PR DB may be a table. For example, the path planner module 1330 may transmit a path rule set corresponding to information (e.g., OS information or app information) of the user terminal 1200, which is received from the intelligence agent 1251, to the NLU module 1320. In one embodiment, the table stored in the PR DB 1331 may be stored for each domain or for each version of the domain.

According to an embodiment, the path planner module 1330 may select one path rule or the plurality of path rules from the path rule set, and transmit the selected one path rule or the selected plurality of path rules to the NLU module 1320. For example, the path planner module 1330 may match the user intent and corresponding parameters to the path rule set corresponding to the user terminal 1200 to select one path rule or a plurality of path rules and may transmit the selected one path rule or the selected plurality of path rules to the NLU module 1320.

According to an embodiment, the path planner module 1330 may generate the one path rule or the plurality of path rules by using the user intent and corresponding parameters. For example, the path planner module 1330 may determine the app to be executed and the action to be executed in the app based on the user intent and corresponding parameters when generating the one path rule or the plurality of path rules. According to an embodiment, the path planner module 1330 may store the generated path rule in the PR DB 1331.

According to an embodiment, the path planner module 1330 may store the path rule generated by the NLU module 1320 in the PR DB 1331. The generated path rule may be added to the path rule set stored in the PR DB 1331.

According to an embodiment, the table stored in the PR DB 1331 may include a plurality of path rules or a plurality of path rule sets. The plurality of path rules or the plurality of path rule sets may reflect the kind, version, type, or characteristics of the device performing each path rule.

According to an embodiment, the DM module 1340 may determine whether the user intent derived by the NLU module 1320 is clear. For example, the DM module 1340 may determine whether the user intent is clear, based on whether the corresponding parameters are sufficient. The DM module 1340 may determine whether the parameters derived by the NLU module 1320 is sufficient to perform a task. According to an embodiment, in the case where the user intent is not clear, the DM module 1340 may perform cause feedback and make a request for necessary information to the user. For example, the DM module 1340 may ask the user about the parameter corresponding to the user intent so that the user input can be clarified.

According to an embodiment, the DM module 1340 may include a content provider module. In the case where the content provider module executes an action based on the intent and the parameters derived by the NLU module 1320, the content provider module may generate the result obtained by performing a task corresponding to the user input. According to an embodiment, the DM module 1340 may transmit the result generated by the content provider module as the response to the user input to the user terminal 1200.

According to an embodiment, the natural language generating module NLG 1350 may change specified information, such as natural language speech, into text. For example, the specified information may be information about an additional input, information for guiding the completion of an action corresponding to the user input, or information for guiding the additional input of the user (e.g., feedback information about the user input). The information changed to the text form may be displayed in the display 1220 after being transmitted to the user terminal 1200 or may be changed to voice output after being transmitted to the TTS module 1360.

According to an embodiment, the TTS module 1360 may convert text input to voice output. The TTS module 1360 may receive text input from the NLG module 1350, may change the text input to voice output, and may transmit the voice output to the user terminal 1200. The user terminal 1200 may output the voice output via the speaker 1230.

According to an embodiment, the NLU module 1320, the path planner module 1330, and the DM module 1340 may be implemented as one module. For example, the NLU module 1320, the path planner module 1330 and the DM module 1340 may be implemented as one module, may determine the user intent and corresponding parameters, and may generate a response (e.g., a path rule) corresponding to the determined user intent and parameters. As such, the generated response may be transmitted to the user terminal 1200.

FIG. 16 is a diagram illustrating a path rule generating method of an NLU module, according to an embodiment of the present disclosure.

Referring to FIG. 16, according to an embodiment, the NLU module 1320 may divide the function of an app into unit actions (e.g., A to F) and may store the divided unit actions in the PR DB 1331. For example, the NLU module 1320 may store a path rule set, which includes a plurality of path rules A-B1-C1, A-B1-C2, A-B1-C3-D-F, and A-B1-C3-D-E-F divided into unit actions, in the PR DB 1331.

According to an embodiment, the PR DB 1331 of the path planner module 1330 may store the path rule set for performing a function of the app. The path rule set may include a plurality of path rules each of which includes a plurality of actions. An action to be executed according to parameter inputs for each of the plurality of actions may be sequentially arranged in the plurality of path rules. According to an embodiment, the plurality of path rules implemented in a form of ontology or a graph model and may be stored in the PR DB 1331.

According to an embodiment, the NLU module 1320 may select an optimal path rule A-B1-C3-D-F corresponding to the intent of a user input and the intent's corresponding parameters.

According to an embodiment, in the case where there is no path rule completely matched to the user input, the NLU module 1320 may transmit a plurality of rules to the user terminal 1200. For example, the NLU module 1320 may select a path rule (e.g., A-Bl) that partly corresponds to the user input. The NLU module 1320 may then select one or more path rules (e.g., A-B1-C1, A-B1-C2, A-B1-C3-D-F, and A-B1-C3-D-E-F) including the path rule (e.g., A-B1) and may transmit the one or more path rules to the user terminal 1200.

According to an embodiment, the NLU module 1320 may select one of a plurality of path rules based on an additional input received by the user terminal 1200 and may transmit the selected one path rule to the user terminal 1200. For example, the NLU module 1320 may select one path rule (e.g., A-B1-C3-D-F) of the plurality of path rules (e.g., A-B1-C1, A-B1-C2, A-B1-C3-D-F, and A-B1-C3-D-E-F) depending on the additional user input (e.g., an input for selecting C3).

According to another embodiment, the NLU module 1320 may determine the intent of the user and corresponding parameters corresponding to the additional user input (e.g., an input for selecting C3). The user terminal 1200 may select one path rule (e.g., A-B1-C3-D-F) from the plurality of path rules (e.g., A-B1-C1, A-B1-C2, A-B1-C3-D-F, and A-B1-C3-D-E-F) based on intent derived from the additional user input.

As such, the user terminal 1200 may complete the actions of the apps 1241 and 1243 based on the selected one path rule.

According to an embodiment, in the case where a user input in which information is insufficient is received by the intelligence server 1300, the NLU module 1320 may generate a path rule partly corresponding to the received user input. For example, the NLU module 1320 may transmit the partly corresponding path rule to the intelligence agent 1251. The intelligence agent 1251 may transmit the partly corresponding path rule to the execution manager module 1253, and the execution manager module 1253 may execute the first app 1241 depending on the path rule. The execution manager module 1253 may transmit information about an insufficient parameter to the intelligence agent 1251 while executing the first app 1241. The intelligence agent 1251 may make a request for an additional input to a user by using the information about the insufficient parameter. When the additional input is received by the user, the intelligence agent 1251 may transmit and process the additional input to the intelligence server 1300. The NLU module 1320 may generate a path rule to be added, based on the intent of the user input additionally entered and parameter information and may transmit the path rule to be added, to the intelligence agent 1251. The intelligence agent 1251 may transmit the path rule to the execution manager module 1253 and may execute the second app 1243.

According to an embodiment, in the case where a user input, in which a portion of information is missing, is received by the intelligence server 1300, the NLU module 1320 may transmit a user information request to the personal information server 1400. The personal information server 1400 may transmit information regarding the user entering the user input stored in a persona database to the NLU module 1320. The NLU module 1320 may then use the partial user input and the information from the personal information server 1400 to select a path rule. As such, even though the user input is partial and is missing certain information, the NLU module 1320 may make a request for the missing information to the user or may determine the path rule corresponding to the user input by using previously-stored user information.

The term "module" used in this specification may include a unit implemented with hardware, software, or firmware. For example, the term "module" may be interchangeably used with the term "logic," "logic block," "component," "circuit," and the like. The "module" may be an integrated component or a part thereof for performing one or more functions or a part thereof. The "module" may be implemented mechanically or electronically and may include, for example, an application-specific IC (ASIC) chip, a field-programmable gate array (FPGA), and a programmable-logic device for performing some operations, which are known or will be developed.

According to various embodiments, at least a part of an apparatus (e.g., modules or functions thereof) or a method (e.g., operations) may be, for example, implemented by instructions stored in a computer-readable storage media (e.g., the memory 1130) in the form of a program module. The instructions, when executed by a processor (e.g., the processor 1120), may cause the processor to perform functions corresponding to the instructions. The computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), an embedded memory, and the like. The one or more instructions may contain a code made by a compiler or a code executable by an interpreter.

Each element (e.g., a module or a program module) according to various embodiments may be composed of single entity or a plurality of entities, a part of the above-described sub-elements may be omitted or may further include other elements. Alternatively or additionally, after being integrated in one entity, some elements (e.g., a module or a program module) may identically or similarly perform the function executed by each corresponding element before integration. According to various embodiments, operations executed by modules, program modules, or other elements may be executed by a successive method, a parallel method, a repeated method, or a heuristic method, or at least one part of operations may be executed in different sequences or omitted. Alternatively, other operations may be added.

While the present disclosure has been shown and described with reference to various embodiments thereof, it will be understood by those skilled in the art that various changes in form and details may be made therein without departing from the scope of the present disclosure as defined by the appended claims.

Certain aspect of the above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

## Claims

1. An electronic device comprising:
a microphone (110);
a display (120);
a communication circuit (140);
a memory (150) in which an application is stored; and
a processor (130) electrically connected to the microphone (110), the display (120), the communication circuit (140), and the memory (150),
wherein the processor (130) is configured to:
output an execution screen of the application on the display (120);
obtain voice data through the microphone (110);
display, on the execution screen, a text converted from the voice data;
display, on the execution screen, an indicator associated with a standby time determined based on at least one of an acquisition time of the voice data and a length of the text, wherein the acquisition time of the voice data is the total time period from a point in time when the input of the voice data is started to when the voice input is terminated; and
when the standby time elapses, transmit the text to an external device through the communication circuit (140).

2. The electronic device of claim 1, wherein the indicator indicates a length of the determined standby time.

3. The electronic device of claim 1, wherein the processor (130) is further configured to:
change the indicator while the standby time elapses.

4. The electronic device of claim 1, wherein an occurrence record of a first event is stored in the memory (150), and
wherein the processor (130) is further configured to:
decrease a length of the determined standby time based on the occurrence record of the first event.

5. The electronic device of claim 1, wherein an occurrence record of a second event is stored in the memory (150), and
wherein the processor (130) is further configured to:
increase a length of the determined standby time based on the occurrence record of the second event.

6. The electronic device of claim 1, wherein the processor (130) is further configured to:
when a first event occurs before the standby time elapses, transmit the text to the external device.

7. The electronic device of claim 6, wherein an occurrence record of the first event is stored in the memory (150), and
wherein the processor (130) is further configured to:
store data associated with the first event in the occurrence record of the first event.

8. The electronic device of claim 1, wherein the processor (130) is further configured to:
when a second event occurs before the standby time elapses, pause elapse of the standby time.

9. The electronic device of claim 8, wherein an occurrence record of the second event is stored in the memory (150), and
wherein the processor (130) is further configured to:
store data associated with the second event in the occurrence record of the second event.

10. The electronic device of claim 8, wherein the processor (130) is further configured to:
when a touch gesture associated with a text area displayed on the execution screen is input, sense occurrence of the second event.

11. The electronic device of claim 1, wherein the processor (130) is further configured to:
when receiving a revision input associated with the text while the standby time elapses, revise the text in response to the revision input; and
transmit the revised text to the external device.

12. The electronic device of claim 1, wherein the processor (130) is further configured to:
when a touch gesture associated with a text area displayed on the execution screen is input, wait for a revision input associated with the text.

13. The electronic device of claim 1, wherein the indicator includes a plurality of icons, and
wherein the processor (130) is further configured to:
display the plurality of icons on the execution screen, wherein a number of the plurality of icons is proportional to a length of the determined standby time.

14. A method performed by an electronic device (100), the method comprising:
obtaining voice data through a microphone (110);
displaying a text converted from the voice data on a display (120);
displaying, on the display (120), an indicator associated with a standby time determined based on at least one of an acquisition time of the voice data and a length of the text, wherein the acquisition time of the voice data is the total time period from a point in time when the input of the voice data is started to when the voice input is terminated; and
when the standby time elapses, determining a text to be entered.

15. The method of claim 14, further comprising:
modifying a length of the determined standby time by using pre-stored data.

## Patentansprüche

1. Elektronische Vorrichtung, umfassend:
ein Mikrofon (110);
eine Anzeige (120);
eine Kommunikationsschaltung (140);
einen Arbeitsspeicher (150), in dem eine Anwendung gespeichert ist; und
einen Prozessor (130), der elektrisch mit dem Mikrofon (110), der Anzeige (120), der Kommunikationsschaltung (140) und dem Arbeitsspeicher (150) verbunden ist,
wobei der Prozessor (130) konfiguriert ist:
einen Ausführungsbildschirm der Anwendung auf der Anzeige (120) auszugeben;
Sprachdaten durch das Mikrofon (110) zu erhalten;
auf dem Ausführungsbildschirm einen aus den Sprachdaten umgewandelten Text anzuzeigen;
auf dem Ausführungsbildschirm einen Indikator anzuzeigen, der einer Bereitschaftszeit zugeordnet ist, die auf Grundlage entweder einer Erfassungszeit der Sprachdaten oder einer Länge des Textes bestimmt wird, wobei die Erfassungszeit der Sprachdaten aus der Gesamtzeitspanne von einem Zeitpunkt, an dem die Eingabe der Sprachdaten gestartet wird, bis zu dem Zeitpunkt besteht, an dem die Spracheingabe beendet wird; und
wenn die Bereitschaftszeit abläuft, den Text über die Kommunikationsschaltung (140) an eine externe Vorrichtung zu übertragen.

2. Elektronische Vorrichtung nach Anspruch 1, bei der der Indikator eine Länge der festgelegten Bereitschaftszeit anzeigt.

3. Elektronische Vorrichtung nach Anspruch 1, wobei der Prozessor (130) ferner konfiguriert ist:
den Indikator zu ändern, während die Bereitschaftszeit abläuft.

4. Elektronische Vorrichtung nach Anspruch 1, wobei ein Vorgangsdatensatz eines ersten Ereignisses in dem Arbeitsspeicher (150) gespeichert ist, und
wobei der Prozessor (130) ferner konfiguriert ist:
eine Länge der ermittelten Bereitschaftszeit auf Grundlage des Vorgangsdatensatzes des ersten Ereignisses zu verringern.

5. Elektronische Vorrichtung nach Anspruch 1, wobei ein Vorgangsdatensatz eines zweiten Ereignisses in dem Arbeitsspeicher (150) gespeichert ist, und
wobei der Prozessor (130) ferner konfiguriert ist:
eine Länge der ermittelten Bereitschaftszeit auf Grundlage des Vorgangsdatensatzes des zweiten Ereignisses zu erhöhen.

6. Elektronische Vorrichtung nach Anspruch 1, wobei der Prozessor (130) ferner konfiguriert ist:
den Text an die externe Vorrichtung zu übertragen, wenn ein erstes Ereignis vor Ablauf der Bereitschaftszeit eintritt.

7. Elektronische Vorrichtung nach Anspruch 6, wobei ein Vorgangsdatensatz des ersten Ereignisses im Arbeitsspeicher (150) gespeichert ist, und
wobei der Prozessor (130) ferner konfiguriert ist:
Daten, die mit dem ersten Ereignis verbunden sind, im Vorgangsdatensatz des ersten Ereignisses zu speichern.

8. Elektronische Vorrichtung von Anspruch 1, wobei der Prozessor (130) ferner konfiguriert ist:
den Ablauf der Bereitschaftszeit zu pausieren, wenn ein zweites Ereignis vor Ablauf der Bereitschaftszeit eintritt.

9. Elektronische Vorrichtung nach Anspruch 8, wobei ein Vorgangsdatensatz des zweiten Ereignisses im Arbeitsspeicher (150) gespeichert ist, und
wobei der Prozessor (130) ferner konfiguriert ist:
Daten, die mit dem zweiten Ereignis verbunden sind, im Vorgangsdatensatz des zweiten Ereignisses zu speichern.

10. Elektronische Vorrichtung nach Anspruch 8, wobei der Prozessor (130) ferner konfiguriert ist:
den Vorgang des zweiten Ereignisses zu erfassen, wenn eine mit einem Textbereich verbundenen Berührungsgeste, die auf dem Ausführungsbildschirm angezeigt wird, eingegeben wird.

11. Elektronische Vorrichtung nach Anspruch 1, wobei der Prozessor (130) ferner konfiguriert ist:
beim Empfangen einer Revisionseingabe, die mit dem Text verbunden ist, während die Bereitschaftszeit abläuft, den Text als Reaktion auf die Revisionseingabe zu überarbeiten; und den überarbeiteten Text an die externe Vorrichtung zu übertragen.

12. Elektronische Vorrichtung nach Anspruch 1, wobei der Prozessor (130) ferner konfiguriert ist:
bei der Eingabe einer Berührungsgeste, die mit einem auf dem Ausführungsbildschirm angezeigten Textbereich verbunden ist, auf eine Revisionseingabe zu warten, die mit dem Text verbunden ist.

13. Elektronische Vorrichtung von Anspruch 1, wobei der Indikator eine Vielzahl von Symbolen aufweist, und
wobei der Prozessor (130) ferner konfiguriert ist:
die Vielzahl von Symbolen auf dem Ausführungsbildschirm anzuzeigen, wobei eine Anzahl der Vielzahl von Symbolen proportional zu einer Länge der bestimmten Bereitschaftszeit ist.

14. Verfahren, das von einer elektronischen Vorrichtung (100) durchgeführt wird, wobei das Verfahren umfasst:
ein Erhalten von Sprachdaten durch ein Mikrofon (110);
ein Anzeigen eines aus den Sprachdaten umgewandelten Textes auf einer Anzeige (120);
ein Anzeigen eines Indikators auf der Anzeige (120), der einer Bereitschaftszeit zugeordnet ist, die auf Grundlage entweder einer Erfassungszeit der Sprachdaten oder einer Länge des Textes bestimmt wird, wobei die Erfassungszeit der Sprachdaten aus der gesamten Zeitspanne von einem Zeitpunkt, an dem die Eingabe der Sprachdaten begonnen wird, bis zum Ende der Spracheingabe besteht; und
beim Ablauf der Bereitschaftszeit einen einzugebenden Text zu bestimmen.

15. Verfahren des Anspruchs 14, das ferner umfasst:
ein Modifizieren einer Länge der ermittelten Bereitschaftszeit durch Verwendung von vorgespeicherten Daten.

## Revendications

1. Dispositif électronique comprenant :
un microphone (110) ;
un afficheur (120) ;
un circuit de communication (140) ;
une mémoire (150) dans laquelle une application est stockée ; et
un processeur (130) électriquement branché au microphone (110), à l'afficheur (120), au circuit de communication (140) et à la mémoire (150),
ledit processeur (130) étant configuré pour :
émettre un écran d'exécution de l'application sur l'afficheur (120) ;
obtenir des données vocales par l'intermédiaire du microphone (110) ;
afficher, sur l'écran d'exécution, un texte converti à partir des données vocales ;
afficher, sur l'écran d'exécution, un indicateur associé à un temps d'attente déterminé sur la base d'au moins l'un d'un temps d'acquisition des données vocales et d'une longueur du texte, ledit temps d'acquisition des données vocales étant la période de temps totale allant du moment dans le temps où l'entrée des données vocales est commencée jusqu'au moment où l'entrée vocale est terminée ; et
lorsque le temps d'attente s'est écoulé, transmettre le texte à un dispositif externe par l'intermédiaire du circuit de communication (140).

2. Dispositif électronique selon la revendication 1, ledit indicateur indiquant la durée du temps d'attente déterminé.

3. Dispositif électronique selon la revendication 1, ledit processeur (130) étant en outre configuré pour :
modifier l'indicateur pendant que le temps d'attente s'écoule.

4. Dispositif électronique selon la revendication 1, un registre d'occurrence d'un premier événement étant stocké dans la mémoire (150), et
ledit processeur (130) étant en outre configuré pour :
diminuer la durée du temps d'attente déterminé sur la base du registre d'occurrence du premier événement.

5. Dispositif électronique selon la revendication 1, un registre d'occurrence d'un second événement étant stocké dans la mémoire (150), et
ledit processeur (130) étant en outre configuré pour :
augmenter la durée du temps d'attente déterminé sur la base du registre d'occurrence du second événement.

6. Dispositif électronique selon la revendication 1, ledit processeur (130) étant en outre configuré pour :
lorsqu'un premier événement a lieu avant l'écoulement du temps d'attente, transmettre le texte au dispositif externe.

7. Dispositif électronique selon la revendication 6, un registre d'occurrence du premier événement étant stocké dans la mémoire (150), et
ledit processeur (130) étant en outre configuré pour :
stocker des données associées au premier événement dans le registre d'occurrence du premier événement.

8. Dispositif électronique selon la revendication 1, ledit processeur (130) étant en outre configuré pour :
lorsqu'un second événement a lieu avant que l'écoulement du temps d'attente, interrompre l'écoulement du temps d'attente.

9. Dispositif électronique selon la revendication 8, un registre d'occurrence du second événement étant stocké dans la mémoire (150), et
ledit processeur (130) étant en outre configuré pour :
stocker des données associées au second événement dans le registre d'occurrence du second événement.

10. Dispositif électronique selon la revendication 8, ledit processeur (130) étant en outre configuré pour :
lorsqu'un geste tactile associé à une zone de texte affichée sur l'écran d'exécution est entré, détecter l'occurrence du second événement.

11. Dispositif électronique selon la revendication 1, ledit processeur (130) étant en outre configuré pour :
lors de la réception d'une entrée de révision associée au texte pendant que le temps d'attente s'écoule, réviser le texte en réponse à l'entrée de révision ; et
transmettre le texte révisé au dispositif externe.

12. Dispositif électronique selon la revendication 1, ledit processeur (130) étant en outre configuré pour :
lorsqu'un geste tactile associé à une zone de texte affichée sur l'écran d'exécution est entré, attendre une entrée de révision associée au texte.

13. Dispositif électronique selon la revendication 1, ledit indicateur comportant plusieurs icônes, et
ledit processeur (130) étant en outre configuré pour :
afficher plusieurs icônes sur l'écran d'exécution, un certain nombre desdites plusieurs icônes étant proportionnel à la durée du temps d'attente déterminé.

14. Procédé exécuté par un dispositif électronique (100), ledit procédé comprenant :
l'obtention de données vocales par l'intermédiaire d'un microphone (110) ;
l'affichage d'un texte converti à partir des données vocales sur un afficheur (120) ;
l'affichage, sur l'afficheur (120), d'un indicateur associé à un temps d'attente déterminé sur la base d'au moins l'un d'un temps d'acquisition des données vocales et d'une longueur du texte, ledit temps d'acquisition des données vocales étant la période de temps totale allant du moment dans le temps où l'entrée des données vocales est commencée jusqu'au moment où l'entrée vocale est terminée ; et
lorsque le temps d'attente s'est écoulé, la détermination d'un texte à entrer.

15. Procédé selon la revendication 14, comprenant en outre :
la modification de la durée du temps d'attente déterminé à l'aide de données pré-stockées.
